# EUROPEAN PATENT APPLICATION

(11) **EP 4 012 679 A1**
(43) Date of publication of application: **15.06.2022**
(21) Application number: 21196046.3
(22) Date of filing: 10.09.2021
(51) Int. Cl.: G08G 1/01, G08G 1/04, G06N 3/08, G06N 20/00, G07C 5/08

(54) **MONITORING SYSTEM, APPARATUS OF A VEHICLE, APPARATUS OF A ROADSIDE UNIT, TRAFFIC INFRASTRUCTURE SYSTEM, AND METHODS THEREOF**

(30) Priority: 14.12.2020 US 202017120279
(71) Applicant: Intel Corporation, Santa Clara, CA 95054 (US)
(72) Inventor: GUIM BERNAT, Francesc, Barcelona (ES); WOUHAYBI, Rita, Portland, 97229 (US); CARRANZA, Marcos E., Portland, 97229 (US); SIVANESAN, Kathiravetpillai, Portland, 97229 (US); SEHRA, Suman, Folsom, 95630 (US)
(74) Representative: Viering, Jentschura & Partner mbB Patent- und Rechtsanwälte

(57) **Abstract**

Various aspects are related to an apparatus of a traffic infrastructure system including one or more processors configured to: obtain estimation data, the estimation data representing one or more estimations generated by a roadside unit of one or more traffic related characteristics, obtain estimation reference data, the estimation reference data representing one or more reference estimations associated with the one or more estimations represented by the estimation data, generate roadside unit validation data based on validating the one or more estimations represented by the estimation data based on the estimation reference data, the roadside unit validation data representing one or more results of the validation of the one or more estimations.

## Description

### Technical Field

Various aspects relate generally to one or more apparatus of a traffic infrastructure system, e.g., a monitoring system, e.g., a roadside unit or an apparatus of a roadside unit, an apparatus of a vehicle, and methods thereof.

### Background

In general, the development of traffic related network infrastructures may be applied in the field of intelligent transportation. A so-called "intelligent transportation system" (ITS) may include aspects to provide one or more services relating to transport management, e.g., with the goal of enabling a safe and coordinated use of a transport network. One or more aspects of an ITS may be related to road traffic. A road traffic related ITS may include information and communication technologies applied in the field of road transportation, including, for example, infrastructure, vehicles, and users. Various forms of communication technologies may be used to implement communication in an ITS, e.g., short-range communication or long-range communication. A communication between a vehicle and the infrastructure may be referred to as vehicle-to-infrastructure (V2I)-communication and/or infrastructure-to-vehicle (I2V)-communication. A communication between vehicles may be referred to as vehicle-to-vehicle (V2V)-communication. A communication of infrastructure components among one another may be referred to as infrastructure-to-infrastructure (I2I)-communication or infrastructure internal communication. An ITS may include vehicles equipped with onboard unit (OBUs) and roadside units (RSUs). V2V-communications may include data exchange of onboard units among one another and V2I-communications may include data exchange between an OBU and one or more RSUs.

### Brief Description of the Drawings

Throughout the drawings, it should be noted that like reference numbers are used to depict the same or similar elements, features, and structures. The drawings are not necessarily to scale, emphasis instead generally being placed upon illustrating aspects of the disclosure. In the following description, some aspects of the disclosure are described with reference to the following drawings, in which:
FIG. 1 shows an exemplary traffic infrastructure system and components thereof in a schematic view, according to some aspects;
FIGS. 2A to 2D show exemplarily various components that may be part of a traffic infrastructure system in a schematic view, according to some aspects;
FIGS. 3A and 3B show exemplarily various components that may be part of a traffic infrastructure system in a schematic view, according to some aspects;
FIG. 4A shows various components that may be associated with a traffic infrastructure system in a schematic view, according to some aspects;
FIG. 4B shows a diagram related to a trade-off of latency versus throughput in processing same type of problems with different levels of complexity and accuracy, according to some aspects;
FIGS. 5A and 5B show exemplarily various components that may be part of a traffic infrastructure system in a schematic view, according to some aspects; and
FIGS. 6 to 8 show exemplarily flow diagrams associated with operations of components that may be part of a traffic infrastructure system in a schematic view, according to some aspects.

### Description

The following detailed description refers to the accompanying drawings that show, by way of illustration, specific details and aspects in which the disclosure may be practiced. These aspects are described in sufficient detail to enable those skilled in the art to practice the disclosure. Other aspects may be utilized and structural, logical, and electrical changes may be made without departing from the scope of the disclosure. The various aspects are not necessarily mutually exclusive, as some aspects can be combined with one or more other aspects to form new aspects. Various aspects are described in connection with methods and various aspects are described in connection with devices. However, it may be understood that aspects described in connection with methods may similarly apply to the devices, and vice versa.

Various aspects are related to a traffic infrastructure system including one or more apparatus that determine (e.g., over time) how various roadside units (or other components of the traffic infrastructure system) behave and provide information about how robust or trustworthy information provided by the roadside units are, e.g., considering various types of conditions. Various aspects are related to implementations of advanced models to validate (e.g., autonomously) estimations (e.g., predictions) of one or more roadside units. Various aspects are related to an implementation of a feedback scheme including assessments of one or more vehicles associated with the estimations (e.g., predictions) coming from the roadside units.

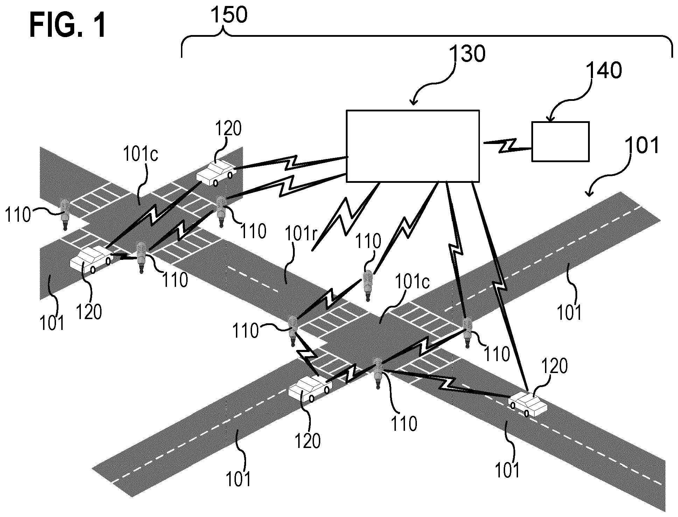

**FIG.** 1 illustrates a road system 101, a plurality of vehicles 120, as exemplary road users, and a traffic infrastructure system 150 in a schematic view, according to various aspects. It is noted that all types of traffic participants, e.g., motor bikes, robots, busses, trucks, bicycles, pedestrians, may use the road system 100 and may be understood as road-users in a similar was as the illustrated vehicles 120. The road system 101 may include roads 101r, intersections 101c, and/or any other road structures (not illustrated), e.g., bridges, tunnels, parking garages, as examples.

According to various aspects, each (or at least one) of the vehicles 120 may include an apparatus (e.g., an on-board unit) that may be configured to allow for a communication between one or more of the vehicles 120 and components of the traffic infrastructure system 150, e.g., between one or more vehicles 120 and one or more roadside units 110, between one or more vehicles 120 and a monitoring system 130, and/or between one or more vehicles 120 and a vehicle monitoring system 140. The monitoring system 130 (also referred to as monitoring entity, also referred to as attestation and reputation entity) may be part of or implemented in one or more centralized computing devices and/or one or more decentralized computing devices. The monitoring system 130 may include one or more centralized computing devices and/or one or more decentralized computing devices. The monitoring system 130 may be an entity of an intelligent transportation system or may be an additional entity associated with an intelligent transportation system. The monitoring system 130 may be configured to receive data from the one or more roadside units 110, from the one or more vehicles 120, and/or from the vehicle monitoring system 140, as examples. The data transfer that allows transferring information between the various apparatus is illustrated in FIG. 1 by help of the bolt sign. The monitoring system 130 may include one or more communication interfaces and/or one or more application programming interfaces (APIs) for the respective data transfer. The monitoring system 130 may be configured to send data to the one or more roadside units 110 and/or to the one or more vehicles 120 and/or to broadcast data to allow for a reception of the data by the one or more roadside units 110 and/or the one or more vehicles 120. The one or more roadside units 110 may include or may be coupled to one or more transmitters and/or one or more receivers for the respective data transfer. The one or more vehicles 120 (e.g., one or more apparatus of each of the vehicles 1120) may include or may be coupled to one or more transmitters and/or one or more receivers for the respective data transfer. The monitoring system 130 may include or may be coupled to one or more transmitters and/or one or more receivers for the respective data transfer. The vehicle monitoring system 140 may include or may be coupled to one or more transmitters and/or one or more receivers for the respective data transfer.

The one or more roadside units 110 may be coupled to or may include one or more sensors to obtain data (e.g., sensor data). Sensor data may represent traffic related information. Sensor data may be an input for a model-based estimation (e.g., an estimation of a current state or an estimation of a state in the future, referred to as prediction) of one or more traffic related characteristics. Traffic related information may include environmental information, e.g., information related to weather conditions, temperature, humidity, fog, rainfall, snowfall, sunshine, daytime, nighttime, illumination, only as examples. Traffic related information may include vehicle information, e.g., information related to traffic density, an accident, a velocity of one or more vehicles, a type of one or more vehicles, a function of one or more vehicles (e.g., the vehicle, e.g., an ambulance, may be privileged), only as examples. Traffic related information may include road condition information, e.g., information related to the presence of an icy road, a wet road, a dry road, a number of potholes, a surface condition of a road, only as examples). Traffic related information may include information related to road works, redirections, a status of one or more traffic lights, pedestrian crossings, only as examples.

The one or more sensors associated with one or more roadside units 110 may include, for example, one or more cameras. A roadside unit 110 may obtain traffic related information from image data, e.g., by applying one or more image analyzing algorithms on the image data. One or more cameras may be configured to provide the image data. However, the one or more sensors associated with one or more roadside units 110 may include other types of sensors, e.g., one or more RADAR (radio detection and ranging) sensors, one or more temperature sensors, one or more humidity sensors, one or more illumination sensors, one or more acoustic sensors, one or more LIDAR (light detection and ranging) sensors, only as examples.

The one or more roadside units 110, one or more apparatus of a roadside unit 110, one or more processors of a roadside units 110, or one or more processors of one or more apparatus of a roadside unit 110 may be configured to generate estimation data. Estimation data may represent an estimation of one or more traffic related characteristics based on traffic related information. An estimation of one or more traffic related characteristics may include a weather condition, a temperature, a humidity, presence of fog, presence of rainfall, presence of snowfall, presence of sunshine, a time, presence of daytime, presence of nighttime, an illumination, only as examples. An estimation of one or more traffic related characteristics may include a traffic density, presence of an accident, a velocity of one or more vehicles, a type of one or more vehicles, a function of one or more vehicles (e.g., the vehicle, e.g., an ambulance, may be privileged), only as examples. An estimation of one or more traffic related characteristics may include a road condition information, e.g., presence of an icy road, presence of a wet road, presence of a dry road, a number of potholes, a surface condition of a road, only as examples. An estimation of one or more traffic related characteristics may include presence of road works, status of one or more roads, presence of redirections, a status of one or more traffic lights, presence of a pedestrian crossing, presence of a pedestrian on the road, only as examples.

The one or more roadside units 110, one or more apparatus of a roadside unit 110, one or more processors of a roadside units 110, or one or more processors of one or more apparatus of a roadside unit 110 may be configured to cause to send (e.g., to output to a transmitter or to transmit) the estimation data to one or more vehicles 120 in the vicinity of the roadside unit 110. The vicinity of the roadside unit 110 may include a coverage of one or more transmitters associated with the respective roadside unit 110, e.g., based on the type of transmission, e.g., a short-range transmission (e.g., in a range up to 100 m or more) or a long-range transmission (e.g., up to 1 km or more than 1km) may be used depending on the type of information and the desired estimation.

The one or more roadside units 110, one or more apparatus of a roadside unit 110, one or more processors of a roadside units 110, or one or more processors of one or more apparatus of a roadside unit 110 may be configured to obtain monitoring data. Monitoring data may represent one or more parameters associated with the creation of the estimation of the one or more traffic related characteristics. The estimation may be based on model calculations or model-based algorithms (e.g., including one or more neuronal network implementations, or one or more AI implementations) using sensor data as data input. Monitoring data may include one or more data types of the following group of data types: sensor data representing traffic related information (e.g., the sensor data that are used to generate the one or more estimations represented by the estimation data), model data representing one or more characteristics (e.g., model identification, e.g., model type, e.g., model parameters) of a model used to generate the one or more estimations, contextual data representing ambient information related to the roadside unit 110 (e.g., illumination, weather conditions, as examples), execution data representing one or more characteristics associated with an execution (e.g., workload of one or more processors that are used to generate the one or more estimations, e.g., system conditions of a computing system that is used to generate the one or more estimations, as examples) of a model used to generate the one or more estimations.

The one or more roadside units 110, one or more apparatus of a roadside unit 110, one or more processors of a roadside unit 110, or one or more processors of one or more apparatus of a roadside unit 110 may be configured to cause to send (e.g., output to a transmitter) the estimation data and, e.g., optionally, the monitoring data to a monitoring system associated with the roadside unit 110 (e.g., the monitoring system 130) for creating validation data. Validation data may represent an estimation quality associated with estimations generated by the one or more apparatus of the roadside unit 110. As an example, the one or more apparatus of the roadside unit 110 may generate further one or more estimations after the one or more estimations had been generated, and another entity, e.g., a vehicle, may validate the further one or more estimations based on the validation data associated with the one or more estimations.

According to various aspects, the monitoring system 130 or one or more processors of the monitoring system 130 may be configured to obtain estimation data and, e.g., optionally, monitoring data associated with a roadside unit (e.g., one of the roadside units 110). Estimation data may represent one or more estimations generated by the roadside unit 110 of one or more traffic related characteristics, e.g., as described above. Monitoring data may represent ancillary information associated with a creation of the one or more estimations by the roadside unit 110, e.g., as described above. Ancillary information may include traffic related information (e.g., sensor information), model information (e.g., model identification information, e.g., model type information, e.g., model parameter information), contextual information representing ambient information (e.g., illumination information, weather condition information, as examples), execution information (e.g., workload information, e.g., system condition information, as examples).

According to various aspects, the monitoring system 130 or one or more processors of the monitoring system 130 may be configured to obtain estimation reference data. Estimation reference data may represent a reliability of the one or more estimations represented by the estimation data. Estimation reference data may represent one or more reference estimations associated with the one or more estimations represented by the estimation data. In general, various types of data (or illustratively feedback from other instances than the roadside unit 110 that has generated the one or more estimations) may be suitable to perform a validation of the one or more estimations based thereon. The type of estimation reference data may fit to the type of the one or more estimations made.

In some aspects, the monitoring system 130 may obtain (e.g., generate) the estimation reference data, e.g., based on higher quality processing of the same sensor data that are used by the roadside unit 110 to generate the one or more estimations. In this case, the respective roadside unit 110 may transmit the sensor data (e.g., as part of the monitoring data) to the monitoring system 130.

In other aspects, the monitoring device 130 may obtain (e.g., generate) estimation reference data based on additional sensor data that one or more vehicles 120 may transmit to the monitoring device 130. The one or more vehicles 120 may obtain, for example, additional sensor data (e.g., by one or more sensors of the respective vehicle 120) that represent additional traffic related information. The monitoring system 130 or one or more processors of the monitoring system 130 may be configured to generate additional estimation data based on the additional sensor data. The additional estimation data representing one or more additional estimations of the one or more traffic related characteristics. The monitoring system 130 may generate the one or more additional estimations or the additional estimation data based on the additional sensor data. The roadside unit 110 may use the one or more additional estimations or the additional estimation data as estimation reference data to validate the estimations based on the sensor data.

In still other aspects, the monitoring device 130 may obtain (e.g., receive) estimation reference data from the one or more vehicles 120. The one or more vehicles 120 may generate, for example, additional estimation data representing one or more additional estimations of the respective one or more traffic related characteristics. The respective vehicle 120 (e.g., the on-board unit of the vehicle 120) may generate the one or more additional estimations, e.g., based on additional sensor data based on additional sensor data (e.g., obtained by one or more sensors of the respective vehicle 120). The respective one or more vehicles 120 may send the one or more additional estimations represented by the additional estimation data to the monitoring system 130. The monitoring system 130 may use the additional estimation data as estimation reference data to validate the estimations generated by the roadside unit 110.

According to various aspects, the monitoring system 130 or one or more processors of the monitoring system 130 may be configured to validate the one or more estimations based on the estimation data, e.g., optionally the monitoring data, and the estimation reference data. According to various aspects, the monitoring system 130 or one or more processors of the monitoring system 130 may be configured to generate roadside unit validation data. The roadside unit validation data representing one or more results of the validation of the one or more estimations.

According to various aspects, the monitoring system 130 or one or more processors of the monitoring system 130 may be configured to obtain (e.g., receive) roadside unit validation data from one or more sensors, e.g., from one or more sensors associated with or included in one or more vehicles 120. In some aspects, the monitoring system 130 or one or more processors of the monitoring system 130 may be may be directly communicatively coupled to the sensors to consider the sensor data in one or more estimations.

According to various aspects, the monitoring system 130 or one or more processors of the monitoring system 130 may be configured to obtain (e.g., receive) roadside unit validation data from the one or more vehicles 120. In some aspects, the one or more vehicles 120 may generate, for example, additional estimation data representing one or more additional estimations of the respective one or more traffic related characteristics. The respective vehicle 120 (e.g., the on-board unit of the vehicle 120) may generate the one or more additional estimations based on additional sensor data based on additional sensor data (e.g., obtained by one or more sensors of the respective vehicle 120). The one or more vehicles 120 or one or more apparatus of the respective one or more vehicles 120 may be configured to obtain (e.g., receive) the estimation data and, e.g., optionally the monitoring data, from the roadside unit 110. The one or more additional estimations represented by the additional estimation data may serve as estimation reference data and the one or more vehicles 120 or one or more apparatus of the respective one or more vehicles 120 may be configured to validate the one or more estimations generated by the roadside unit 110 based on the estimation data, optionally the monitoring data, and the estimation reference data, and generate roadside unit validation data. The roadside unit validation data may represent one or more results of the validation of the one or more estimations. The respective one or more vehicles may transmit the roadside unit validation data to the monitoring system 130.

According to various aspects, a single entity or a plurality of entities, e.g., one or more apparatus of one or more vehicles 120, e.g., the monitoring system 130, e.g., one or more apparatus of one or more roadside units 110, as examples, may carry out one or more or all functions of the monitoring system 130.

In some aspects, a monitoring system 130 may receive data from a vehicle 120, e.g., estimation reference data or validation data (e.g., data related to feedback on how a specific roadside unit provided inputs), as examples. In some aspects, the monitoring system 130 may be configured to ignore such data in the case that the data provided from the vehicle 120 are not correct or have at least a low reliability. According to various aspects, a monitoring system (e.g., the monitoring system 130 or the vehicle monitoring system 140 associated with one or more vehicles 120) or one or more processors of a monitoring system may be configured to: obtain vehicle reliability data, the vehicle reliability data representing a reliability of data generated by one or more apparatus of a vehicle, validate the data generated by the one or more apparatus of the vehicle based on the vehicle reliability data, generate vehicle validation data, the vehicle validation data representing one or more results of the validation of the data generated by the one or more apparatus of the vehicle. The data generated by the one or more apparatus of the vehicle 120 may include estimation reference data, the estimation reference data may represent a reliability of an estimation generated by a roadside unit and/or one or more reference estimations associated with the estimation generated by a roadside.

In some aspects, one or more apparatus of a traffic infrastructure system (e.g., monitoring system 130, or vehicle monitoring system 140) may include one or more processors configured to: obtain vehicle trust data, the vehicle trust data representing an estimation quality associated with estimations generated by a vehicle, and cause to send, e.g., upon request, the vehicle trust data to a monitoring system (e.g., monitoring system 130).

According to various aspects, a vehicle (e.g., vehicle 120) or one or more apparatus of a vehicle (e.g., of vehicle 120) may include one or more processors configured to: obtain estimation data, the estimation data representing an estimation generated by a roadside unit of one or more traffic related characteristics, obtain validation data or trust data, the validation data or trust data representing an estimation quality associated with estimations generated by the roadside unit, and selectively use or disregard the estimation represented by the estimation data based on the validation data or trust data.

According to various aspects, a vehicle (e.g., vehicle 120) or one or more apparatus of a vehicle (e.g., of vehicle 120) may include one or more processors configured to: obtain estimation data, the estimation data representing an estimation generated by a roadside unit (e.g., roadside unit 110) of one or more traffic related characteristics, obtain validation data or trust data, the validation data or trust data representing an estimation quality associated with estimations generated by the roadside unit, and either allow, modify, or deny one or more vehicle-related actions based on both the estimation data and the validation data or trust data.

According to various aspects, a vehicle (e.g., vehicle 120) or one or more apparatus of a vehicle (e.g., of vehicle 120) may include one or more processors configured to: obtain estimation data and monitoring data, the estimation data representing an estimation generated by a roadside unit (e.g., roadside unit 110) of one or more traffic related characteristics and the monitoring data representing one or more parameters associated with the creation of the estimation of the one or more traffic related characteristics, obtain (receive, generate, load, etc.) reference data (e.g., by measuring and/or determining using sensors of the vehicle), the reference data representing a reliability of the estimation represented by the estimation data and/or a reference estimation associated with the estimation represented by the estimation data, validate the estimation based on the estimation data, the monitoring data, and the reference data, and cause to send validation data to a monitoring system, the validation data representing on one or more results of the validation of the estimation.

According to various aspects, a traffic infrastructure system (e.g., traffic infrastructure system 150) may include one or more monitoring systems (e.g., monitoring system 130), one or more roadside units (e.g., roadside units 110), one or more vehicles (or at least one onboard units of one or more vehicles, e.g., one or more vehicles 120), and one or more vehicle monitoring systems (e.g., vehicle monitoring system 140).

According to various aspects, a traffic infrastructure system (e.g., traffic infrastructure system 150) may include a roadside unit (e.g., roadside unit 110) connected to or including one or more (e.g., one or more first) sensors, the roadside unit may be, in a first operation mode, configured to generate a first estimation of one or more traffic related characteristics based on first sensor data provided from the one or more sensors to the roadside unit, the roadside unit may be, in a second operation mode, configured to obtain second sensor data and generate a second estimation of the one or more traffic related characteristics based on the second sensor data, and compare the first estimation and the second estimation with one another and based on the comparison, and determine a quality of the first sensor data and/or a quality of the first estimation.

The traffic infrastructure system (e.g., traffic infrastructure system 150) may further include an additional roadside unit (e.g., another roadside unit 110), the additional roadside unit may be connected to or include one or more additional (e.g., one or more second) sensors and may be configured to generate an estimation of one or more traffic related characteristics based on second sensor data provided from the one or more additional (e.g., one or more second) sensors to the additional roadside unit, wherein the additional roadside unit is configured to transmit the second sensor data to the roadside unit.

The traffic infrastructure system (e.g., traffic infrastructure system 150) may further include that the roadside unit (e.g., roadside unit 110) may be configured to store the first sensor data as reference data in one or more memories and to load the reference data from the one or more memories, the reference data loaded from the one or more memories may serve as the second sensor data.

The traffic infrastructure system (e.g., traffic infrastructure system 150) may further include that the roadside unit (e.g., roadside unit 110) may be configured to obtain the second sensor data based on a communication with an apparatus of the traffic infrastructure system, e.g., from the monitoring system (e.g., monitoring system 130), from a cloud computing system, from a cloud storage system, as examples.

According to various aspects, one or more apparatus of a roadside unit (e.g., of roadside unit 110) may include one or more processors configured to obtain first sensor data, generate a first estimation of one or more traffic related characteristics based on the first sensor data, obtain second sensor data, generate a second estimation of the one or more traffic related characteristics based on the second sensor data, and compare the first estimation and the second estimation with one another, and determine a quality of the first sensor data and/or a quality of the first estimation based on the comparison.

According to various aspects, one or more apparatus of a traffic infrastructure system (e.g., of the traffic infrastructure system 150, e.g., the monitoring system 130) may include one or more processors configured to: obtain trust data, the trust data representing an estimation quality associated with estimations generated by a roadside unit, cause to send, e.g., upon request from a vehicle (e.g., one of the vehicles 120), the trust data to the vehicle.

Various aspects related to a roadside unit (e.g., roadside unit 110), a vehicle (e.g., a vehicle of the one or more vehicles 120), a monitoring system (e.g., monitoring system 130, e.g., a roadside unit monitoring system, a vehicle monitoring system 140, and/or a traffic infrastructure system 150, or one or more processors thereof) are described in the following.

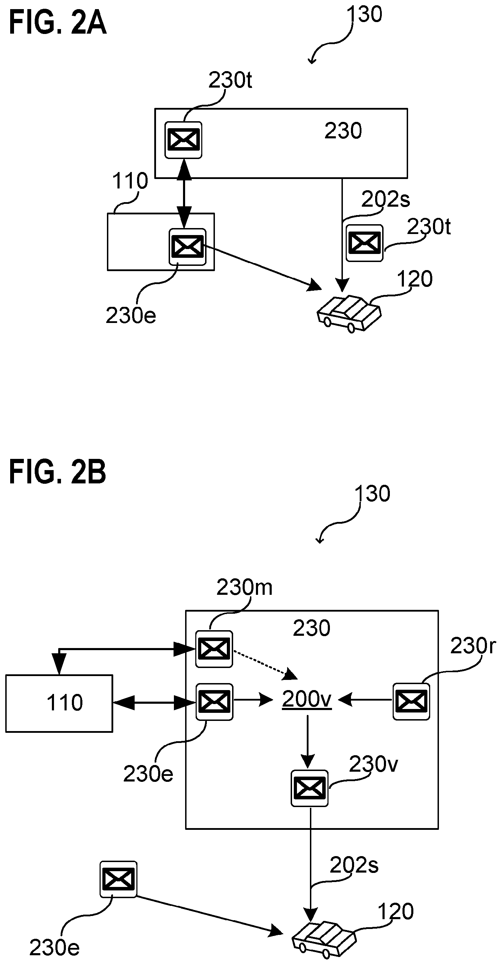

**FIG. 2A** shows one or more apparatus of a traffic infrastructure system (e.g., a monitoring system 130) and various functions thereof in a schematic view, according to various aspects. The monitoring system 130 may include one or more processors 230 configured to obtain trust data 230t. The trust data 230t may represent an estimation quality associated with estimations 230e generated by a roadside unit 110. The one or more processors 230 may be further configured to cause to send 202s the trust data 230t to a vehicle 120.

In some aspects, the vehicle 120 may retrieve the trust data 230t from the monitoring system 130 including the one or more processors 230. This may allow for an assessment of the quality of the estimations represented by the estimation data 230e. In the case that the trust data 230t represent that the roadside unit 110 is not trustworthy, the one or more processors associated with the vehicle may be configured to ignore, trust less, or checked again the estimations 230e from the roadside unit 110.

**FIG. 2B** shows one or more apparatus of a traffic infrastructure system (e.g., a monitoring system 130) and various functions thereof in a schematic view, according to various aspects. The monitoring system 130 may include one or more processors 230 configured to obtain estimation data 230e and, e.g., optionally, monitoring data 230m associated with a roadside unit 110. The estimation data 230e may represent one or more estimations generated by the roadside unit 110 of one or more traffic related characteristics and the monitoring data 230m may represent ancillary information associated with a creation of the one or more estimations by the roadside unit 110. The one or more processors 230 may be further configured to obtain estimation reference data 230r. The estimation reference data 230r may represent one or more reference estimations associated with the one or more estimations generated by the roadside unit 110 and represented by the estimation data. The one or more processors 230 may be further configured to validate 200v the one or more estimations represented by the estimation data 230e based on the estimation reference data 230r, and, e.g., optionally, based on the monitoring data 230m, and generate roadside unit validation data 230v. The roadside unit validation data 230v may represent one or more results of the validation of the one or more estimations. In some aspects, the validation data 230v may be used as trust data 230t, that may be retrieved from the monitoring system 130 by one or more vehicles 120, as explained, for example, with reference to FIG. 1 and FIG. 2A. In other aspects, the validation data 230v may be used to generate trust data 230t based thereon, wherein the monitoring system 130 may send the trust data 230t (e.g., generated by the one or more processors of the monitoring system 130), e.g., upon request, to one or more vehicles 120, as explained, for example, with reference to FIG. 1 and FIG. 2A.

In some aspects, the estimation reference data 230r are generated by the one or more processors 230 of the monitoring system 130, e.g., based on sensor data (raw data) received from the roadside unit 110 or from the one or more sensors associated with the roadside unit 110. In other aspects, the estimation reference data 230r are generated by the one or more processors of a vehicle 120, e.g., based on additional sensor data obtained from the vehicle 120 or from one or more sensors associated with the vehicle 120. In still other aspects, the estimation reference data 230r are generated by the one or more processors 230 of the monitoring system 130, e.g., based on additional sensor data (raw data) received from the vehicle 120 or from one or more sensors associated with the vehicle 120.

As illustrated in FIG. 2A and FIG. 2B, the vehicle 120, or one or more apparatus of the vehicle 120 may include one or more processors configured to the obtain estimation data 230e and obtain the validation data 230v and/or trust data 230t. Further, the one or more processors associated with the vehicle 120 may be configured to selectively use or disregard the estimation represented by the estimation data 230e based on the validation data 230v and/or the trust data 230t. As an example, the one or more processors associated with the vehicle 120 may be configured to either allow, modify, or deny one or more vehicle-related actions based on both the estimation data and the validation data.

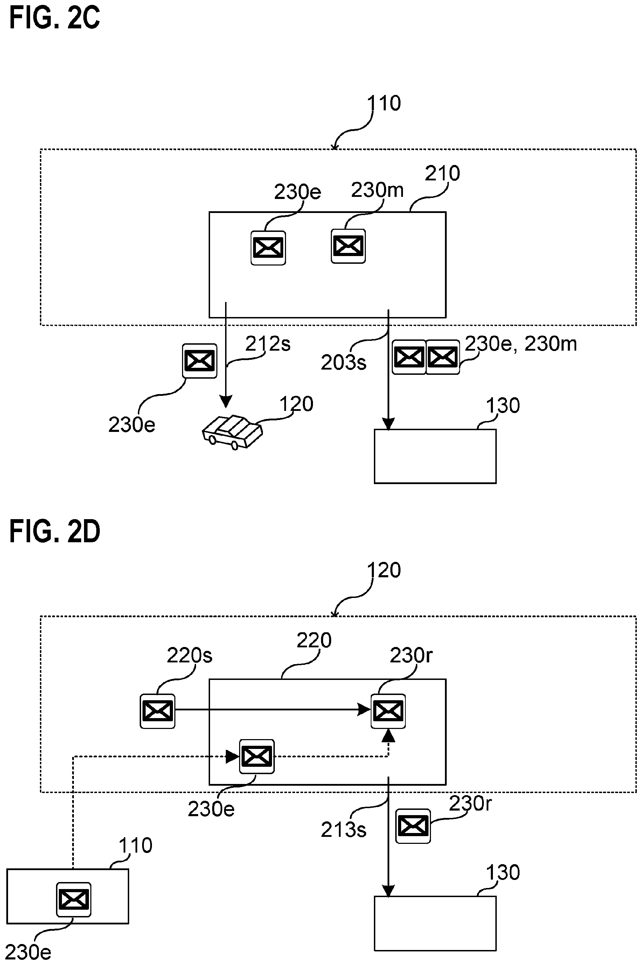

**FIG.** 2C shows one or more apparatus of a roadside unit 110 and various functions thereof in a schematic view, according to various aspects. The one or more apparatus may include one or more processors 210 configured to generate estimation data 230. The estimation data may represent an estimation of one or more traffic related characteristics based on traffic related information. The one or more processors 210 may be further configured to cause to send 212s (e.g., output to a transmitter) the estimation data 230e to one or more vehicles 120 in the vicinity of the roadside unit 110. The one or more processors 210 may be further configured to obtain monitoring data 230m. The monitoring data 230m may represent one or more parameters (e.g., a model ID, e.g., a model type, e.g., contextual information) associated with the creation of the estimation of the one or more traffic related characteristics. The one or more processors 210 may be further configured to cause to send 203s (e.g., output to a transmitter) the estimation data 230e and the monitoring data 230m to a monitoring system 130 associated with the roadside unit 110 for creating validation data.

As illustrated in FIG. 2C, the roadside unit 110 may provide the respective data (estimation data 230e and/or the monitoring data 230m) to the monitoring system 130, and the data may be used to generate validation information, see FIG. 2B.

**FIG. 2D** shows one or more apparatus of a vehicle 110 and various functions thereof in a schematic view, according to various aspects. One or more processors 210 of the vehicle 110 may be configured to generate estimation reference data 230r, e.g., based on additional sensor data 220s obtained from one or more sensors associated with the vehicle 120. The one or more processors 210 of the vehicle 110 may be configured to cause to send 213s the estimation reference data 230r to a monitoring system 130. In other aspects, the one or more processors 210 of the vehicle 110 may be configured to cause to send the additional sensor data 220s obtained from one or more sensors associated with the vehicle 120 to the monitoring system 130 and the monitoring system 130 implements the generation of the estimation reference data 230r.

In other aspects, the one or more processors 210 of the vehicle 110 may be configured to receive in addition to the additional sensor data 220s the estimation data 230e (e.g., from the roadside unit 110 or the monitoring system 130). The one or more processors 220 associated with the vehicle 120 may generate estimation reference data based on both the one or more estimations represented by the estimation data 230e generated by the roadside unit 110 and the one or more additional sensor data (e.g., obtained by one or more sensors of the vehicle).

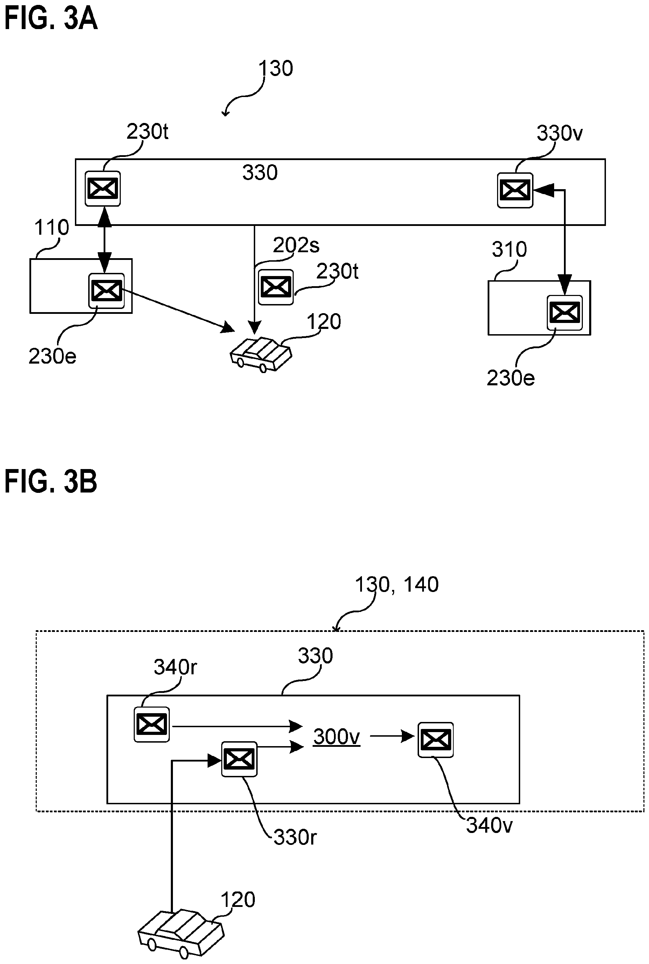

**FIG. 3A** shows one or more apparatus of a traffic infrastructure system (e.g., a monitoring system 130) and various functions thereof in a schematic view, according to various aspects. The monitoring system 130 may include one or more processors 330 configured to assign additional trust data 330v or validation data 330v to one or more additional roadside units 310. The one or more additional roadside units 310 may be of the same type as the roadside unit 110. The additional validation data 330v may represent the same one or more results as the validation data obtained with reference to the roadside unit 110. The validation data 230v and/or trust data 230t representing the estimation quality associated with estimations generated by the roadside unit 110 and the additional validation data 330v or trust data 330v representing the same estimation quality but associated to estimations generated by the one or more additional roadside units 310. This allows for an assessment of the quality associated with estimations from roadside units 310 that are not investigated in more detail based on the assumption, that the same type of roadside units may deliver similar estimation quality under similar conditions.

**FIG. 3B** shows one or more apparatus of a traffic infrastructure system (e.g., a monitoring system 130 or a vehicle monitoring system 140) and various functions thereof in a schematic view, according to various aspects. The monitoring system 130, 140 may include one or more processors 330 configured to obtain vehicle reliability data 340r. The vehicle reliability data 340r may represent a reliability of data 330r (e.g., estimation reference data 230r, e.g., additional sensor data 220s) generated by one or more apparatus of a vehicle 120, see FIG.2D. The one or more processors 330 may be further configured to validate 300v the data 330r generated by the one or more apparatus of the vehicle (e.g., generated by the one or more apparatus of the vehicle) based on the vehicle reliability data 340r, and generate vehicle validation data 340v. The vehicle validation data 340v may represent one or more results of the validation 300v of the data 330r generated by the one or more apparatus of the vehicle 120.

In some aspects, in the case that the vehicle validation data 340v represent that the vehicle 120 and/or it provided data 330r is not trustworthy, the one or more processors of the monitoring system 130, 140 are configured to ignore, less trust, or check again the data 330r received from the vehicle 120.

According to various aspects, the one or more processors 230, 330 of the monitoring system 130, 140 may be configured to assign additional vehicle validation data to one or more additional vehicles 120. The one or more additional vehicles may include, for example, the same type of hardware (e.g., the same on-board units, e.g., the same sensors, as examples) as the vehicle 120. The one or more additional vehicles may have, for example, the same brand (e.g., made be the same car manufacturer) as the vehicle 120. This allows for an assessment of the quality associated with estimations from one or more vehicles 120 that are not investigated in more detail based on the assumption, that the same type of vehicles, hardware, and/or sensors may deliver similar estimation quality under similar conditions.

Various aspects related to a roadside unit (e.g., roadside unit 110 and/or the one or more processors 210 op a roadside unit 110), a vehicle (e.g., a vehicle of the one or more vehicles 120 or one or more processors 220 of a vehicle), a monitoring system (e.g., monitoring system 130, 140, e.g., a roadside unit monitoring system, a vehicle monitoring system 140, a traffic infrastructure system 15, or one or more processors 230, 330 thereof) are described in the following.

One of the challenges in V2X/V2V-communication deployments may be the aspect of how much entities moving across the infrastructure can trust the information that a roadside unit or other information providers provide. As an example, the roadside unit may inform an entity that in 100 m distance that the road will be ice. The roadside unit may obtain this information based on an estimation (e.g., a prediction). The estimation may be model-based including sensor data as input. It may not be the case that the roadside unit is acting in a malicious way (e.g., it has been compromised). Rather, it may be the case that the roadside unit may generate better or worse estimations/predictions depending on other factors (e.g., time of the day, ambient, how crowded the infrastructure is, etc.).

On the other hand, a roadside unit may run different models and may have different static (e.g., type of platform, CPU, AI accelerators, etc.) and dynamic (e.g., load, thermals, etc.) characteristics. In this view, there may be a need to have a solution to determine how one or more roadside units behave in a large-scale deployment (e.g., with more than one thousand RSUs) and how trustworthy they are. Some aspects of determining and handling validation data and trust data are described above, wherein such validation data and trust data may represent how trustworthy data (e.g., representing estimations/predictions) generated by one or more roadside units are. In addition, one or more additional conditions (represented by monitoring data) may be considered to provide condition dependent validation data and trust data representing how trustworthy data (e.g., representing estimations/predictions) generated by one or more roadside units are under the certain conditions. As an example, a specific roadside unit 110 may have first validation data and/or first trust data assigned thereto for a first condition (e.g., at daytime, e.g., with sunshine, with low processor load, with a low traffic density), and a second validation data and/or second trust data assigned thereto for a second condition (e.g., at night, e.g., with rain or fog, with high processor load, with a high traffic density), wherein the quality of estimations made by the roadside unit 110 may be different for each of the respective conditions; and this may be represented in the respective validation data and/or trust data.

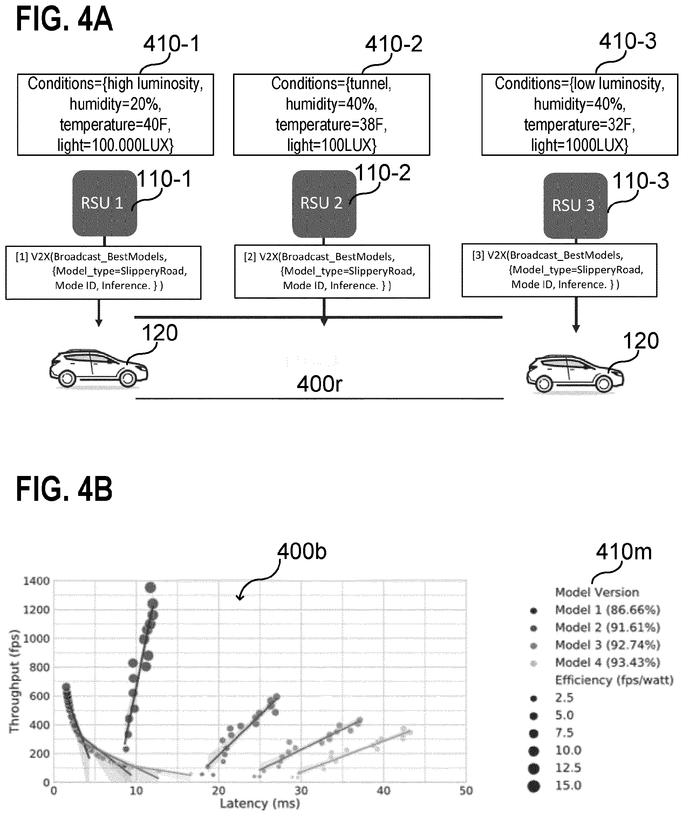

As shown in **FIG. 4A****,** a vehicle 120 may receive estimations/predictions about a status of a road on which the vehicle 120 is driving from different roadside units 110-1, 110-2, 110-3 along a ride 400r. The status of the road may include information representing whether the road may be slippery or not. Models deployed on those locations may behave better depending the conditions. For instance, the same model deployed on the three different roadside units 110-1, 110-2, 110-3 may be more accurate on the first roadside unit 110-1 because of the corresponding first ambient condition 410-1 (e.g., more light, e.g., less humidity, as examples) compared to, for example, the second roadside unit 110-2 having the second ambient condition 410-2 associated therewith and/or the third roadside units 110-3 having the third ambient condition 410-3 associated therewith. Hence, trustworthiness (e.g., a quality of estimations, a reputation, as examples) of those models (and therefore of those roadside units) may depend on respective ambient conditions. In some aspects, one or more apparatus and/or one or more methods are described that allows to vehicles to attest and validate a reputation of models depending on one or more additional (e.g., external) conditions.

One or more aspects may include a mechanism where infrastructure, e.g., a traffic infrastructure system 150, (in scale-out and/or centralized fashion) can learn and define over time how various roadside units 110 behave and provide information (e.g., represented by validation data and/or trust data) about how robust or trustworthy are they under various types of conditions. Each of the roadside units 110 may be responsible for randomly sending samples of each of the estimations/predictions and/or information that are provided to the vehicles 120 to a monitoring entity (e.g., a monitoring system 130, 140) of the infrastructure. The roadside unit 110 may perform the sampling in order to cover different models, actions, and conditions (ambient, light, etc.). The infrastructure (e.g., the monitoring system) may use mode advanced models in order to create a ground truth that establishes over time part of the reputation.

**FIG. 4B** shows as example different models 410m with a lesser or higher level of accuracy depending on their complexity. Model 1 may have an accuracy of 86.66 %, model 2 may have an accuracy of 91.61 %, model 3 may have an accuracy of 92.74 %, and model 4 may have an accuracy of 93.43 %. In some aspects, models with a higher accuracy, e.g., with an accuracy above 90 %, e.g., above 92 % or above 93 %, (e.g., model 4) may be used to create the ground truth. The ground truth may be an aspect represented by the estimation validation data 230v, 330v to determine (e.g., based on a comparison) the quality of estimations made by one or more roadside units 110. The diagram 400b illustrated in FIG. 4B shows the throughput in frames per second (e.g., for processing images of image sensors) vs. the latency in milliseconds for various models. Information about the efficiency (in frames per second per watt) are represented by the size of the symbols.

In some aspects, one or more vehicles 120 receiving or using information from a roadside unit 110 can provide feedback to the infrastructure (e.g., to the monitoring system 130) after the prediction or event can be validated; for instance, a prediction of a wet road. Infrastructure (e.g., including monitoring system 130, 140) may use attestation schemes to validate reputation or trustworthy of vehicles 120 providing feedback at the same time. For instance, in the case that a given vehicle provides bad feedback for consolidated roadside units. The reputation of the vehicle 120, e.g., represented by vehicle reliability data 340r or vehicle validation data 340v, may evolve during time.

According to various aspects, the apparatus described herein (e.g., the monitoring system 130) may use additional schemes to make it stronger, such as a block-chain-scheme to keep certified track of evolution of the infrastructure.

In some aspects, a V2X-infrastructure may be expanded with one or more entities capable to learn over time how well or bad different models executed by roadside units behave over time (how well they predict) based on at least two aspects.

A first aspect may include using advanced models to validate (e.g., autonomously) on how each of the roadside units predict over time. To do this, one or more (e.g., every) model that runs on the edge (which may typically tend to be more simple to achieve better performance at lower cost and power envelope) may have a corresponding model on the infrastructure, which has higher accuracy (e.g., because of the resolution it uses or because the neural network architecture that is being used).

A second aspect may include using feedback from the vehicles (e.g., validations) from received predictions coming from the roadside units. For instance, a vehicle may receive an estimation/prediction from a first roadside unit telling that the road is likely to be icy in 100 meters distance. The vehicle may validate this estimation/prediction just after 100 meters and provide feedback to the infrastructure. The feedback may be at least partially represented by data 330r (e.g., estimation reference data 230r, e.g., additional sensor data 220s) generated by one or more apparatus of the vehicle 110, see FIG. 2D.

According to some aspects, the infrastructure (e.g., by the monitoring system 130) may cross both the first aspect and the second aspect mentioned above with contextual information, such as ambient, for each of the roadside units. A goal may be to identify, how much these contextual elements may affect accuracy and work of the roadside unit. As example, the intensity of the light can be used to determine certain conditions: Bright Summer Day: 100,000 Lux (-10,000 footcandles); Full Daylight: 10,000 Lux (-1,000 footcandles); Overcast Day: 1,000 Lux (-100 footcandles); Traditional Office Lighting: 300-500 Lux (30-50 footcandles); Common Stairway: 50-100 Lux (5-10 footcandles); Twilight: 10 Lux (1 footcandle); Full Moon: <1 Lux (<0.1 footcandle). As an explanation, a light source, like an incandescent bulb for example, may emit light in all directions, of which the total measurement is displayed as luminous flux. Now, lumens are a unit of light, but when put into context over a given surface area, they become especially a more useful metric, which moves us onto illuminance (footcandles/lux).

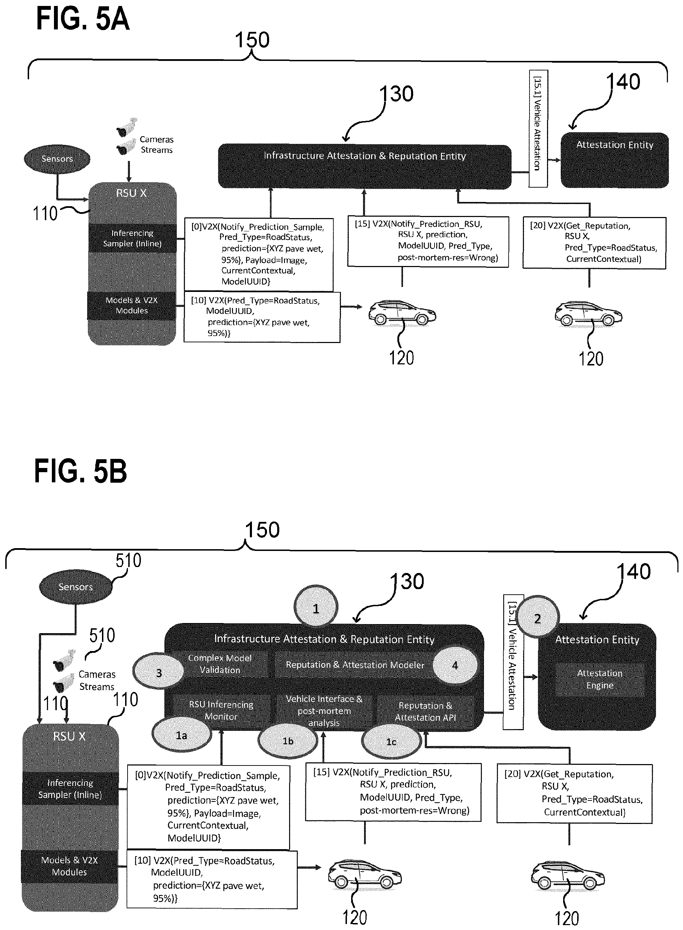

FIG. 5A and FIG. 5B show aspects of a traffic infrastructure system 150 including a roadside unit 110 (exemplarily for one of a plurality of roadside units 110), a vehicle 120 (exemplarily for one of one or more vehicles 120), and one or more monitoring systems 130, 140. The following aspects may be included as part of the traffic infrastructure system 150.

A monitoring part of the infrastructure (e.g., monitoring system 130). The monitoring system 130 may be an entity residing on the backhaul of the network, where all the various roadside units 110 and elements of the network can connect and that is managed (e.g., by the infrastructure owner). The monitoring system 130 may include one or more interfaces, e.g., a first interface 1a, a second interface 1b, and a third interface 1c, exposed to one or more vehicles 120 and/or one or more roadside units 110.

A first interface 1a may be configured to allow to the roadside unit 110 to provide sampling of at least some of the inferences (e.g., estimations, e.g., predictions) or projections that the roadside unit 110 provide to the one or more vehicles 120. The first interface 1a may include at least one of the following, see [0] in FIGS. 5A and 5B:
a model ID of the model (or the roadside unit 110) that was used for performing the inferencing;
a model type that identifies what type of model is performed and what type of inference is performed (e.g., a model type may indicate a prediction on whether a road is dry, wet, or icy);
payload (e.g., raw data from sensors 510) that was used to perform the inference (e.g., one or more images, LIDAR data, other sensors). In some aspects, the payload (e.g., sensor data) may have a highest possible resolution regardless local projection on the roadside unit 110 may use a smaller resolution due to limited computing capacity of the roadside unit 110.
result of the inference that the model achieved; and/or
contextual information such as ambient information; information about how the model was executed and that may affect result of the inference, e.g., load and resource utilized, model resolution (e.g., Float 32 vs INT 8, etc.).

A second interface 1b may be configured to allow to the vehicles 120 to provide feedback to the infrastructure (e.g., to the monitoring system 130) about how particular information or projection from the roadside unit 110 was correct or not. The second interface 1b may include at least one of the following, see [15] in FIGS. 5A and 5B:
a model ID of the model (or the roadside unit 110) that was used for performing the inferencing;
a model type that identifies what type of model is performed and what type of inference is performed (e.g., a model type may indicate a prediction on whether a road is dry, wet, or icy);
the projection or estimation/prediction provided by the roadside unit 110,
the observation by the vehicle 120 once the projection or prediction was validated (e.g., the vehicle 120 goes into an area where it was supposed to be wet and it is actually not wet), and/or
contextual information such as ambient, etc.

A third interface 1c may be configured to allow to the vehicles 120 to access to the reputation of a specific roadside unit 110 for particular model prediction. The third interface 1c may include at least one of the following, see [20] in FIGS. 5A and 5B:
a model ID of the model (or the roadside unit 110) that was used for performing the inferencing;
a model type that identifies what type of model is performed and what type of inference is performed (e.g., a model type may indicate a prediction on whether a road is dry, wet, or icy).

The third interface 1c may utilize the last known contextual information provided by the telemetry (that may be another interface) and the reputation logic to gather the expected accuracy and return it to the vehicle.

The traffic infrastructure system 150 may include a monitoring system 130, 140 (e.g., a vehicle attestation logic 2) configured to create car vehicle reputation (e.g., vehicle validation data 340v). When information (e.g., data 330r) is provided by a vehicle 120, the vehicle may be attested through an (e.g., external) attestation entity 2 for vehicles reputation. Reputation of vehicles may be established over time based on multiple vehicles providing feedback to the infrastructure.

As an example: First, a vehicle 1 at mile 100 at 1:01PM provides feedback that the road is wet and the model at a specific roadside unit 110 indicated that it would be dry with probability of 90%. Second, vehicles 2, 3, and 4 at mile 100 at 1:02PM provide feedback that the road is dry and that the specific roadside unit 110 indicated that it would be dry with probability of 90%. In this example, the infrastructure can infer that it is very likely that vehicle 1 is not trustworthy (e.g., the sensors may be bad, it may be an old vehicle, it may be malicious etc.). But, to consider the vehicle as not trustworthy, it may have to provide bad feedback several times, according to some aspects. For example, in the previous example, at mile 100 at 1:01PM the road was wet only in one lane, the one that was used by vehicle 1, and vehicles 2, 3, and 4 used a different lane. The infrastructure (e.g., the monitoring system 130) may reduce a reputation of a vehicle in the case that the provided information is too far away from all the other vehicles' feedback for a certain situation.

According to various aspects, the infrastructure entity 1 (e.g., the monitoring system 130) may include a validation model entity 3 (e.g., one or more processors configured to provide estimation reference data 230r to validate estimations represented by estimation data 230e from the roadside units 110) that is responsible to actually validate samples provided by the different roadside units and establish whether each of the predictions is accurate and establish a reputation (e.g., represented by validation data 230v, 330v or trust data 230t, 330v) of that roadside unit over time and based on current conditions (e.g., based on monitoring data 230m). In some aspects, the validation model entity 3 may map every model type (e.g., slippery road model) to a ground truth model (e.g., reference or edge models). When the validation model entity 3 receives a new inference based on the first interface 1a, the validation model entity 3 may select the right reference model to infer whether the prediction of the roadside unit has been correct and how much correct it has been (e.g., if the roadside unit 110 provides that there is a probability of having 70% of wet road while the complex model predicts 10%).

The validation model entity 3 may use the predicted information (e.g., including complex model validation) to compute the relative error for the inference. Then the logic may store into a log for that entity: estimated prediction error (e.g., in %), contextual information provided by the roadside unit 110, and/or roadside unit & model type or model ID.

For instance, various models could be trained to identify similar features, see, for example, FIG. 4B. The exemplary models illustrated in FIG. 4B may be based on MobileNetV2 as their backbone. Models 1 to 3 may use 2x SSD (Single Shot Detector) heads as detectors. The higher accuracy may be achieved by increasing the input size: 3x256x256, 3x384x384, and 3x448x448 for 1, 2, and 3, respectively. Model 4 may achieve higher accuracy by using a FCOS (Fully Connected-One-Shot) head, a more complex but more accurate detector. Model 4 may have an input size of 3 x 416 x 416.

It is noted that various models may allow for a generation of estimations (e.g., predictions) based on input data (e.g., based on image data). Examples may include one or more models based on one or more of the following topologies: resnet-18, resnet-50, resnet-152, se-resnet-152, MobileNet-v1, MobileNet-v3, and/or a higher version thereof.

According to various aspects, the infrastructure entity 1 (e.g., the monitoring system 130) may include a reputation and attestation modeler component 4 (e.g., one or more processors 230, 330) configured to create the roadside unit reputation model for the various roadside units 110 and vehicles 120 over time. The attestation may create models that infer how much a roadside unit and/or different models are trustworthy depending on additional conditions. The model (e.g., based on a recurrent neural network (RNN), a deep neural network DNN, or any other learning or data-mining model) may use information provided by the validation model entity 3 and/or the second interface 1b in order to establish reputation.

The model of the reputation and attestation modeler component 4 may have the following inputs: current roadside unit contextual information, type of model to be inferred, as examples. The model of the reputation and attestation modeler component 4 may generate the following outputs: how accurate the prediction is expected.

Additionally, in some aspects, the type of roadside unit 110 (e.g., hardware specs) may be considered to set, increase, or decrease a reputation for a group of similar devices (e.g., roadside units 110 with the same hardware, the same model, etc.) when there is a clear difference in accuracy for one or more models. As an example, some roadside units 110 may use older hardware and newer generations of hardware may include new instructions and working much better, so the reputation system instead of checking and changing roadside unit's reputation one by one, it may change reputation as a group to make the system more efficient and/or scalable. This may help in situation in which some hardware may be about to be replaced but the renewal process takes a time (e.g., months to change many old RSUs). The information from these old roadside units may be useful, when there is no other roadside unit providing data, so the data can be taken by the car and using it to drive cautiously.

Additionally, in some aspects, the edge roadside units may use the reputation mechanism to execute a self-heal scheme. For example, in that case that a first roadside unit and a second roadside unit notice that a reputation of a third roadside unit is degrading over time, they may be configured to help diagnose the issue. Problems may be grouped into the following issues:
the data changed enough that the model needs retraining or at the very least retuning;
there is a problem in the input data, e.g., a camera image quality is reduces, e.g., got too much mud, for example, due to rain, or a newly installed streetlight contributing glare;
the hardware is no longer adequate (e.g., memory errors may occur); and/or
the RSU/model has been tampered with or attacked.

As an autonomous entity, the first roadside unit and/or the second roadside unit may be configured to implement the following process to help diagnose the issue:
Model testing: During off-peak, the first roadside unit and/or the second roadside unit may send a new stream to the third roadside unit to be processed. The first roadside unit and/or the second roadside unit may process that same stream at the same time and measure the difference in accuracy between their models and the model deployed on the third roadside unit. In some aspects, the first roadside unit and/or the second roadside unit may send some calibration needed to accommodate to their context vs. that of the third roadside unit;
Input testing: the first roadside unit and/or the second roadside unit may request to run their models over the input of the third roadside unit and compute the average accuracy vs. their own inputs. If the deviation exceeds a threshold, then perhaps the camera (or other input sensors) may be the problem.
Hardware or tamper testing: the first roadside unit and/or the second roadside unit may keep few archival samples from the third roadside unit and play those back. If the output of the third roadside unit changes over time, then the diagnosis could indicate a problem with the physical device. In the case that the first roadside unit and/or the second roadside unit have the resources to hold the model on the third roadside unit, they may potentially send it to the third roadside unit for redeployment.

According to various aspects, such diagnosis may help a reputation system to add context on whether they should increase or decrease the reputation of model, input, or physical device.

In other aspects, the infrastructure (e.g., the monitoring system 130) may group vehicles by an expected output therefrom. For example, manufacturers may tend to produce a number of different brands. In this case, they may probably reusing different intelligent modules including the models. Roadside units may be configured to help with a creation of an aggregated expectation of such groups of vehicles and their level of accuracy and trustworthiness. Hence, just by knowing the manufacturer of a vehicle, the traffic infrastructure system (e.g., the monitoring system 130 or the roadside unit 110) may have an expected outcome and assign an average trust score thereto.

According to various aspects, an apparatus of a traffic infrastructure system may be configured to obtain infrastructure participant inference data (e.g., roadside unit inference data), the infrastructure participant inference data may represent an inference generated by an infrastructure participant (e.g., by an on-board-unit (OBU), a roadside-unit (RSU), as examples); obtain inference reference data, the inference reference data may represent a trusted inference associated with the inference generated by the infrastructure participant; obtain infrastructure participant reputation data based on both the infrastructure participant inference data and the inference reference data, the infrastructure participant reputation data may represent a confidence associated with the inference generated by the infrastructure participant. Further, the apparatus of a traffic infrastructure system may be configured to store the infrastructure participant reputation data to allow for a subsequent determination whether one or more further inferences generated by the infrastructure participant are to be trusted or not based on the infrastructure participant reputation data.

The infrastructure participant inference data may have monitoring data associated therewith, the monitoring data may representing one or more parameters (e.g., representing ambient conditions, hardware conditions, etc.) associated with the inference generated by the infrastructure participant.

According to various aspects, an apparatus of a traffic infrastructure system may be configured to determine under which conditions a roadside unit may provide trustable information. The determination may include a comparison of roadside unit information with other, for example, modeled information and/or with attestation information. One or more vehicles may provide the attestation information (e.g., post mortem).

According to various aspects, an apparatus of a traffic infrastructure system may be configured to determine which group of participants (e.g., group of roadside units, group of vehicles, etc.) provides trustable information.

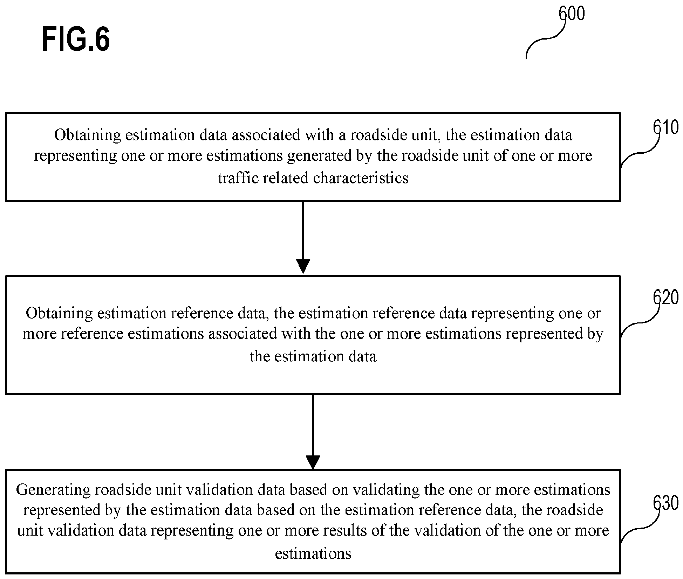

**FIG. 6** shows a flow diagram of a method 600 for monitoring a roadside unit, according to various aspects. The method 600 may include: in 610, obtaining estimation data associated with a roadside unit, the estimation data representing one or more estimations generated by the roadside unit of one or more traffic related characteristics; in 620, obtaining estimation reference data, the estimation reference data representing one or more reference estimations associated with the one or more estimations represented by the estimation data; and, in 630, generating roadside unit validation data based on validating the one or more estimations represented by the estimation data based on the estimation reference data, the roadside unit validation data representing one or more results of the validation of the one or more estimations.

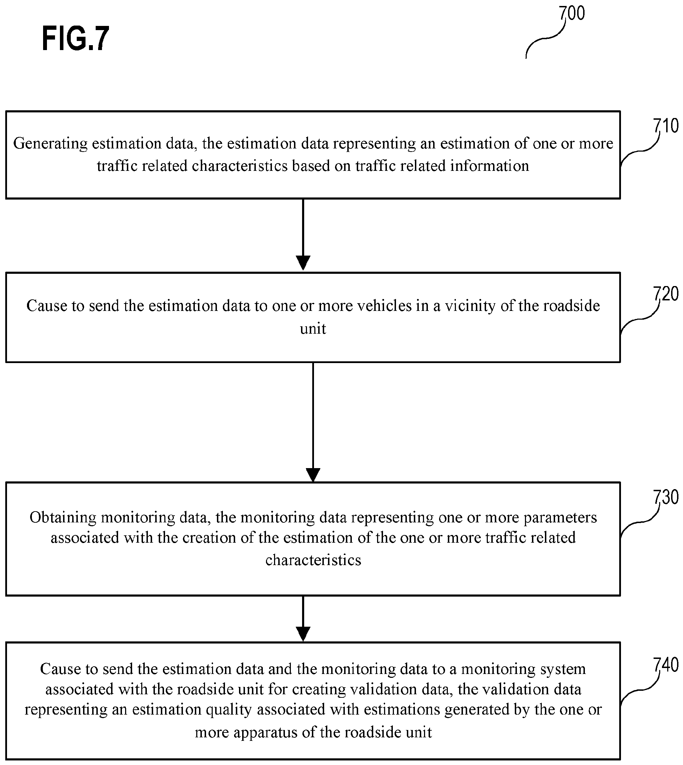

**FIG. 7** shows a flow diagram of a method 700 for operating a roadside unit, according to various aspects. The method 700 may include: in 710, generating estimation data, the estimation data representing an estimation of one or more traffic related characteristics based on traffic related information; in 720, cause to send the estimation data to one or more vehicles in a vicinity of the roadside unit; in 730, obtaining monitoring data, the monitoring data representing one or more parameters associated with the creation of the estimation of the one or more traffic related characteristics; and, in 740, cause to send the estimation data and the monitoring data to a monitoring system associated with the roadside unit for creating validation data, the validation data representing an estimation quality associated with estimations generated by the one or more apparatus of the roadside unit.

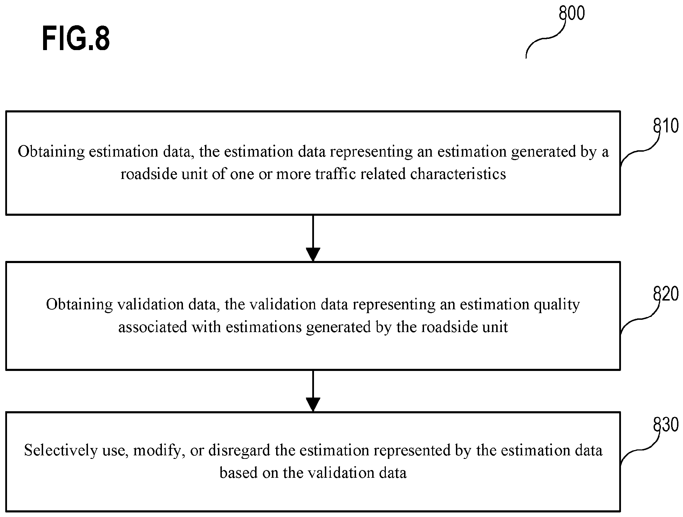

**FIG. 8** shows a flow diagram of a method 800 for operating an apparatus of a vehicle, according to various aspects. The method 800 may include: in 810, obtaining estimation data, the estimation data representing an estimation generated by a roadside unit of one or more traffic related characteristics; in 820, obtaining validation data, the validation data representing an estimation quality associated with estimations generated by the roadside unit; and, in 830, selectively use, modify, or disregard the estimation represented by the estimation data based on the validation data.

In some aspects, the term "generate" is used herein with reference to a generation of data (e.g., estimation data, monitoring data, roadside unit validation data, and vehicle validation data, as examples). The term generate may include or may be understood as one or more of the following terms: to create, to determine, to calculate, e.g., to determine and/or calculate based on one or more models, e.g., to determine and/or calculate based on one or more neural networks, e.g., to determine and/or calculate based on artificial intelligence (AI) implementations, as examples.

In some aspects, the term "obtain" is used herein with reference to obtaining data (e.g., estimation data, monitoring data, sensor data, validation data, roadside unit validation data, and vehicle validation data, as examples). The term obtain may include or may be understood as one or more of the following terms: to generate (e.g., to create, to determine, to calculate, e.g., to determine and/or calculate based on one or more models, e.g., to determine and/or calculate based on one or more neural networks, e.g., to determine and/or calculate based on artificial intelligence (AI) implementations, as examples), to receive (e.g., via one or more receivers), to load (e.g., from one or more memories), as examples.

Various functions and/or processes may be described herein, e.g., with reference to one or more roadside units, one or more vehicles, a monitoring system, a traffic infrastructure system, and one or more entities thereof. It is noted that various combinations of one or more functions and/or one or more processes may be implemented in one or more processors; in some cases independently of the location of the one or more processors within the overall traffic infrastructure system. Illustratively, one or more processors (e.g., of a traffic infrastructure system, of a vehicle, of a monitoring system, of a roadside unit, as examples) may be configured to implement any single function or combination of functions described herein and/or any single process or combination of processes described herein.

The word "exemplary" is used herein to mean "serving as an example, instance, or illustration". Any aspect or design described herein as "exemplary" is not necessarily to be construed as preferred or advantageous over other aspects or designs.

The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).

The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of listed elements.

The words "plural" and "multiple" in the description and the claims expressly refer to a quantity greater than one. Accordingly, any phrases explicitly invoking the aforementioned words (e.g., "a plurality of [objects]," "multiple [objects]") referring to a quantity of objects expressly refers more than one of the said objects. The terms "group (of)," "set [of]," "collection (of)," "series (of)," "sequence (of)," "grouping (of)," etc., and the like in the description and in the claims, if any, refer to a quantity equal to or greater than one, i.e. one or more.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term data, however, is not limited to the aforementioned examples and may take various forms and represent any information as understood in the art.

The terms "processor" as, for example, used herein may be understood as any kind of entity that allows handling data. A processor may handle data according to one or more specific functions executed by the processor. Further, a processor as used herein may be understood as any kind of circuit, e.g., any kind of analog or digital circuit. The term "handle" or "handling" as for example used herein referring to data handling, file handling or request handling may be understood as any kind of operation, e.g., an I/O operation, and/or any kind of logic operation. An I/O operation may include, for example, storing (also referred to as writing) and reading.

A processor may thus be or include an analog circuit, digital circuit, mixed-signal circuit, logic circuit, microprocessor, accelerator, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

Differences between software and hardware implemented data handling may blur. A processor, controller, and/or circuit detailed herein may be implemented in software, hardware and/or as hybrid implementation including software and hardware.

The term "system" (e.g., a monitoring system, a traffic network system, etc.) detailed herein may be understood as a set of interacting elements, wherein the elements can be, by way of example and not of limitation, one or more mechanical components, one or more electrical components, one or more instructions (e.g., encoded in storage media), and/or one or more processors, and the like.

As used herein, the term "memory" (and the like) may be understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component including one or more types of memory. It is readily understood that any single memory component may be separated into multiple collectively equivalent memory components, and vice versa.

The term "vehicle" as used herein may be understood as any suitable type of vehicle, e.g., a motorized vehicle also referred to as automotive vehicle or a non-motorized vehicle, e.g., a bicycle. As an example, a vehicle may be a car also referred to as a motor car, a passenger car, etc. As another example, a vehicle may be a truck (also referred to as motor truck). As other example, a vehicle may be or may include a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, and/or an aircraft.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Various aspects herein may utilize one or more machine learning models to perform or control functions related to traffic control, traffic supervision, and the like. One or more machine learning models may be utilized, for example, to generate estimations of one or more traffic related characteristics based on input data (e.g., based on sensor data). The term "model" as, for example, used herein may be understood as any kind of algorithm, which provides output data from input data (e.g., any kind of algorithm generating or calculating output data from input data). A machine-learning model may be executed by a computing system to progressively improve performance of a specific task. In some aspects, parameters of a machine-learning model may be adjusted during a training phase based on training data. A trained machine-learning model may be used during an inference phase to make predictions or decisions based on input data. In some aspects, the trained machine-learning model may be used to generate additional training data. An additional machine-learning model may be adjusted during a second training phase based on the generated additional training data. A trained additional machine-learning model may be used during an inference phase to make predictions or decisions based on input data.

The term "traffic infrastructure" as used herein may be understood as any type of structure occurring in road traffic that may be configured to influence the road traffic and/or obtain information about the road traffic. As an example, a traffic infrastructure may include a traffic light, a traffic sign, a gateway, a railroad crossing, a drawbridge, a construction site, a heavy goods transport, etc. A traffic infrastructure may include one or more roadside units. A roadside unit may be associated with (e.g., mounted at or included in) a traffic light, a traffic sign, a gateway, a railroad crossing, a drawbridge, a construction site, a heavy goods transport, etc. A roadside unit may be associated with (e.g., including or at least communicatively coupled to) one or more sensors. A traffic infrastructure may include one or more computing devices, e.g., decentralized or centralized. The computing devices may include one or more cloud-based computing devices. The computing devices may include one or more locally installed computing devices associated with specific traffic areas.

In the following, a traffic infrastructure system is illustrated and described exemplarily with reference to one or more vehicles, one or more onboard units (OBUs), and/or one or more roadside units (RSUs). However, the traffic infrastructure system described herein may be implemented to manage any other type of traffic (e.g., people and/or goods flow) in a similar way.

Various aspects are described herein with reference to a motor vehicle; however, other types of vehicles may be provided including the same or similar structures and functions as described exemplarily for the motor vehicle. Various aspects are described herein with reference to specific types of traffic infrastructures (e.g., RSUs working with cameras as sensors); however, other types of traffic infrastructures (e.g., RSUs working with any other type of sensor) may be provided including the same or similar structures and/or functions as described exemplarily herein.

A machine-learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network may include any number of layers. The training of the neural network (e.g., adapting the layers of the neural network) may use or may be based on any kind of training principle, such as backpropagation (e.g., using the backpropagation algorithm).

Various embodiments herein may utilize one or more machine learning models to perform or control functions of one or more apparatus associated with a traffic infrastructure system (or other functions described herein). The term "model" may, for example, used herein may be understood as any kind of algorithm, which provides output data from input data (e.g., any kind of algorithm generating or calculating output data from input data). A machine learning model may be executed by a computing system to progressively improve performance of a specific task. In some aspects, parameters of a machine learning model may be adjusted during a training phase based on training data. A trained machine learning model may be used during an inference phase to make estimations or decisions based on input data. In some aspects, the trained machine learning model may be used to generate additional training data. An additional machine learning model may be adjusted during a second training phase based on the generated additional training data. A trained additional machine learning model may be used during an inference phase to make estimations or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to estimate the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects are described herein with reference to a traffic infrastructure system. Examples for a traffic infrastructure system may be an Intelligent Transportation System (ITS), an Advanced Traffic Management Systems (TMS), or any other suitable system related to an analysis, influence, and/or control of traffic. In some aspects, a traffic infrastructure system may rely on (e.g., real-time) data from road-mounted sensing technologies (e.g., video cameras, inductive loops, etc.). Road-mounted sensing technologies may be realized by or implemented in one or more roadside units. A traffic infrastructure system may be highly networked and may form, in some aspects, master-slave architectures (e.g., a plurality of traffic information, control signals, etc., may be managed from a control center). A traffic infrastructure system may be configured as a centralized, decentralized, or hybrid system.

Various aspects are related to components of a traffic infrastructure system, e.g., to one or more roadside units or other apparatus of a traffic infrastructure system, to one or more on-board units or other apparatus of a vehicle, to a monitoring system. One or more centralized devices and/or one or more decentralized devices may provide the monitoring system (also referred to as monitoring entity or attestation and reputation entity).

In the following, various examples are described relating to aspects and figures described herein.

Example 1 is a monitoring system including one or more processors configured to: obtain estimation data associated with a roadside unit, the estimation data representing one or more estimations generated by the roadside unit of one or more traffic related characteristics, obtain estimation reference data, the estimation reference data representing one or more reference estimations associated with the one or more estimations represented by the estimation data, and generate roadside unit validation data based on validating the one or more estimations represented by the estimation data based on the estimation reference data, the roadside unit validation data representing one or more results of the validation of the one or more estimations.

In Example 2, the monitoring system of Example 1 may optionally include that the one or more processors are further configured to obtain monitoring data. The monitoring data representing (e.g., ancillary) information associated with a creation of the one or more estimations by the roadside unit.

In Example 3, the monitoring system of Example 2 may optionally include that the one or more processors are configured to generate the roadside unit validation data based on validating the one or more estimations represented by the estimation data based on the monitoring data and the roadside unit validation data.

In Example 4, the monitoring system of Example 2 or 3 may optionally include that the monitoring data include sensor data representing traffic related information, and that the sensor data are associated with the one or more estimations generated by the roadside unit of the one or more traffic related characteristics.

In Example 5, the monitoring system of Example 4 may optionally include that the one or more processors are configured to generate the estimation reference data based on one or more algorithms applied on the sensor data.

In Example 6, the monitoring system of Example 3 may optionally include that the monitoring data include classification data representing one or more conditions potentially influencing the generation of the one or more estimations by the roadside unit.

In Example 7, the monitoring system of Example 6 may optionally include that the one or more processors are further configured to classify the roadside unit validation data. The classified roadside unit validation data representing one or more results of the validation of the one or more estimations associated with (e.g., assigned to) the one or more conditions.

In Example 8, the monitoring system of Example 6 or 7 may optionally include that the one or more conditions include one or more of the following conditions: model parameter representing one or more characteristics of a model used to generate the one or more estimations, ambient conditions related to the roadside unit, and/or execution conditions representing one or more characteristics associated with an execution of a model used to generate the one or more estimations.

In Example 9, the monitoring system of any one of Examples 1 to 8 may optionally include that the one or more processors are configured to generate the roadside unit validation data based on a plurality of results of the validation of a plurality of estimations. The roadside unit validation data representing an estimation quality associated with estimations generated by the roadside unit.

In Example 10, the monitoring system of any one of Examples 1 to 9 may optionally include that, in a first time interval, the one or more processors are configured to generate the roadside unit validation data based on a plurality of results of the validation of a plurality of estimations. The roadside unit validation data representing an estimation quality associated with an estimation that is generated by the roadside unit in a second time interval subsequent to the first time interval.

In Example 11, the monitoring system of any one of Examples 1 to 10 may optionally include that the one or more processors are configured to receive the estimation reference data from one or more vehicles.

In Example 12, the monitoring system of Example 11 may optionally include that the one or more processors and/or that one or more additional processors are configured to: obtain vehicle reliability data, the vehicle reliability data representing a reliability of the estimation reference data generated by the one or more vehicles, and generate vehicle validation data based on validating the estimation reference data generated by the one or more vehicle based on the vehicle reliability data. The vehicle validation data are representing one or more results of the validation.

In Example 13, the monitoring system of Example 12 may optionally include that the one or more processors are further configured to either use, modify, or disregard the estimation reference data based on vehicle validation data associated with the vehicle.

In Example 14, the monitoring system of Example 12 or 13 may optionally include that the one or more processors and/or the one or more additional processors are further configured to assign additional vehicle validation data to one or more additional vehicles, the one or more additional vehicles are of the same type as the vehicle. The additional vehicle validation data are representing the same one or more results of the validation as the vehicle validation data.

In Example 15, the monitoring system of any one of Examples 1 to 14 may optionally include that the one or more processors are further configured to cause to send the roadside unit validation data to one or more vehicles.

In Example 16, the monitoring system of any one of Examples 1 to 15 may optionally include that the one or more processors are further configured to assign additional roadside unit validation data to one or more additional roadside units. The one or more additional roadside units are of the same type as the roadside unit. The additional roadside unit validation data are representing the same one or more results of the validation as the roadside unit validation data.

In Example 17, the monitoring system of any one of Examples 1 to 16 may optionally include that the one or more processors are further configured to cause to send an instruction to one or more roadside units based on an evaluation of the roadside unit validation data. The instructions representing a triggering of a repair scheme (e.g., a self-heal) associated with the one or more roadside units.

In Example 18, the monitoring system of any one of Examples 1 to 17 may optionally include that the one or more processors and/or that one or more additional processors are configured to: obtain vehicle trust data based on validating vehicle data generated by one or more vehicles, the vehicle trust data representing a data quality associated with vehicle data generated by the one or more vehicles.

In Example 19, the monitoring system of Example 18 may optionally include that the vehicle data include the estimation reference data generated by the one or more vehicles, and that the one or more processors are further configured to either use, modify, or disregard the estimation reference data based on the vehicle trust data associated with the one or more vehicles.

In Example 20, the monitoring system of Example 18 or 19 may optionally include that the one or more processors and/or the one or more additional processors are further configured to assign additional vehicle trust data to one or more additional vehicles, the one or more additional vehicles are of the same type as the one or more vehicles, the additional vehicle trust data representing the same data quality as the vehicle trust data.

Example 21 is an apparatus of a roadside unit, the apparatus including one or more processors configured to: generate estimation data, the estimation data representing an estimation of one or more traffic related characteristics based on traffic related information, cause to send the estimation data to one or more vehicles in a vicinity of the roadside unit, obtain monitoring data, the monitoring data representing one or more parameters associated with the creation of the estimation of the one or more traffic related characteristics, and cause to send the estimation data and the monitoring data to a monitoring system associated with the roadside unit for creating validation data, the validation data representing an estimation quality associated with estimations generated by the one or more apparatus of the roadside unit.

In Example 22, the apparatus of Example 21 may optionally further include that the one or more processors are further configured to cause to send the monitoring data to the one or more vehicles in the vicinity of the roadside unit.

In Example 23, the apparatus of Example 21 or 22 may optionally further include that the one or more processors are further configured to obtain traffic data, the traffic data representing the traffic related information.

In Example 24, the apparatus of Example 23 may optionally further include that the traffic data represent one or more of the following types of traffic related information: a temperature, a humidity, a weather condition, a traffic density, a velocity of a vehicle, an illumination, an image of a traffic situation, an image of a vehicle, an image of a part of a traffic infrastructure, an operation status of a traffic infrastructure, an operation status of a vehicle.

In Example 25, the apparatus of any one of Examples 21 to 24 may optionally further include that the monitoring data include one or more data types of the following group of data types: sensor data representing traffic related information, model data representing one or more characteristics of a model used to generate the one or more estimations, contextual data representing ambient information related to the roadside unit, execution data representing one or more characteristics associated with an execution of a model used to generate the one or more estimations. The same may optionally apply to other examples related to monitoring data.

Example 31 is an apparatus of a vehicle, the apparatus including one or more processors configured to: obtain estimation data, the estimation data representing an estimation generated by a roadside unit of one or more traffic related characteristics, obtain validation data, the validation data representing an estimation quality associated with estimations generated by the roadside unit, and selectively use, modify, or disregard the estimation represented by the estimation data based on the validation data.

In Example 32, the apparatus of Example 31 may optionally further include that the one or more processors are further configured to either allow, modify, or deny one or more vehicle-related actions based on both the estimation data and the validation data.

Example 33 is an apparatus of a vehicle, the apparatus including one or more processors configured to: obtain estimation data and monitoring data, the estimation data representing an estimation generated by a roadside unit of one or more traffic related characteristics and the monitoring data representing one or more parameters associated with the creation of the estimation of the one or more traffic related characteristics, obtain reference data, the reference data representing a reference estimation associated with the estimation represented by the estimation data, validate the estimation based on the estimation data, the monitoring data, and the reference data, and cause to send validation data to a monitoring system, the validation data representing on one or more results of the validation of the estimation.

In Example 34, the apparatus of Example 33 may optionally further include that the monitoring data include one or more data types of the following group of data types: sensor data representing traffic related information, model data representing one or more characteristics of a model used to generate the one or more estimations, contextual data representing ambient information related to the roadside unit, execution data representing one or more characteristics associated with an execution of a model used to generate the one or more estimations. The same may optionally apply to other examples related to monitoring data.

Example 35 is an apparatus of a vehicle, the apparatus including one or more processors configured to: obtain estimation data and optionally monitoring data, the estimation data representing an estimation generated by a roadside unit of one or more traffic related characteristics and the monitoring data representing one or more parameters associated with the creation of the estimation of the one or more traffic related characteristics, obtain reference data, the reference data representing a reference estimation associated with the estimation represented by the estimation data, cause to send the reference data to a monitoring system, the reference data allow for a validation of the estimation represented by the estimation data, optionally based on the monitoring data.

Example 40 is an apparatus of a traffic infrastructure system (e.g., a monitoring system), the apparatus including one or more processors configured to: obtain trust data, the trust data representing an estimation quality associated with estimations generated by a roadside unit, cause to send the trust data to one or more vehicles. The one or more processors configured to receive a request of one or more vehicles including roadside unit identification data, the roadside unit identification data indicating a specific roadside unit of the traffic infrastructure system, and to cause to send the trust data associated with the specific roadside unit to the one or more vehicles.

Example 41 is a monitoring system (e.g., associated with a traffic infrastructure system), the monitoring system including one or more processors configured to: obtain estimation data and monitoring data associated with a roadside unit, the estimation data representing one or more estimations generated by the roadside unit of one or more traffic related characteristics and the monitoring data representing (e.g., ancillary) information associated with a creation of the one or more estimations by the roadside unit, obtain estimation reference data, the estimation reference data representing one or more reference estimations associated with the one or more estimations represented by the estimation data, validate the one or more estimations based on the estimation data, the monitoring data, and the estimation reference data, and generate roadside unit validation data, the roadside unit validation data representing one or more results of the validation of the one or more estimations.

In Example 42, the monitoring system of Example 41 may optionally further include that the one or more processors are configured to generate the roadside unit validation data based on a plurality of results of the validation of a plurality of estimations, the roadside unit validation data representing an estimation quality associated with estimations generated by the roadside unit.

In Example 43, the monitoring system of Example 41 or 41 may optionally further include that, in a first time interval, the one or more processors are configured to generate the roadside unit validation data based on a plurality of results of the validation of a plurality of estimations, the roadside unit validation data representing an estimation quality associated with an estimation that is generated by the roadside unit in a second time interval subsequent to the first time interval.

In Example 44, the monitoring system of Example 41 may optionally further include that the one or more processors are configured to generate roadside unit trust data based on the roadside unit validation data, the roadside unit trust data representing an estimation quality associated with estimations generated by the roadside unit.

In Example 45, the monitoring system of Example 41or 44 may optionally further include that, in a first time interval, the one or more processors are configured to generate roadside unit trust data based on the roadside unit validation data, the roadside unit trust data representing an estimation quality associated with an estimation that will be generated by the roadside unit in a second time interval subsequent to the first time interval.

In Example 46, the monitoring system of any one of Examples 41 to 45 may optionally further include that the monitoring data include one or more data types of the following group of data types: sensor data representing traffic related information, model data representing one or more characteristics of a model used to generate the one or more estimations, contextual data representing ambient information related to the roadside unit, execution data representing one or more characteristics associated with an execution of a model used to generate the one or more estimations. The same may optionally apply to other examples related to monitoring data.

In Example 46, the monitoring system of any one of Examples 41 to 45 may optionally further include that the monitoring data including sensor data associated with the one or more estimations, and that the one or more estimations are based on the sensor data.

In Example 47, the monitoring system of any one of Examples 45 or 46 may optionally further include that the one or more estimations are generated by one or more roadside units based on the sensor data.

In Example 48, the monitoring system of any one of Examples 45 to 47 may optionally further include that the one or more processors are further configured to generate the estimation reference data based on one or more algorithms applied on the sensor data.

In Example 49, the monitoring system of any one of Examples 45 to 48 may optionally further include that the one or more estimations are generated by one or more roadside units based on one or more first algorithms applied on the sensor data, and that the one or more processors are further configured to generate the estimation reference data based on one or more second algorithms applied on the sensor data. The one or more second algorithms have a higher computational complexity than the one or more first algorithms.

In Example 50, the monitoring system of any one of Examples 45 to 49 may optionally further include that the estimation reference data were/are generated by one or more apparatus of a vehicle based on both the one or more estimations generated by the one or more roadside units and one or more additional sensor data (e.g., obtained by one or more apparatus of the vehicle).

In Example 51, the monitoring system of any one of Examples 45 to 49 may optionally further include that the estimation reference data were/are generated by one or more apparatus of a vehicle based on one or more additional sensor data (e.g., obtained by one or more apparatus of the vehicle).

In Example 52, the monitoring system of Examples 51 may optionally further include that the one or more processors are further configured to obtain vehicle reliability data, the vehicle reliability data representing a reliability of the estimation reference data generated by the one or more apparatus of the vehicle, validate the estimation reference data generated by the one or more apparatus of the vehicle (e.g., generated by the one or more apparatus of the vehicle) based on the vehicle reliability data, and generate vehicle validation data, the vehicle validation data representing one or more results of the validation of the estimation reference data generated by the one or more apparatus of the vehicle.

In Example 53, the monitoring system of any one of Examples 45 to 52 may optionally further include that the sensor data represent one or more of the following traffic related information: a temperature, a humidity, a weather condition, a traffic density, a velocity of a vehicle, an illumination, an image of a traffic situation, an image of a vehicle, an image of a part of a traffic infrastructure, an operation status of a traffic infrastructure, and/or an operation status of a vehicle. The same may optionally apply to other examples related to sensor data.

In Example 54, the monitoring system of any one of Examples 41 to 53 may optionally further include that the one or more processors are further configured to receive the estimation reference data from one or more vehicles.

In Example 55, the monitoring system of Example 54 may optionally further include that the estimation reference data are associated with and/or generated based on additional sensor data. The additional sensor data may represent one or more of the following traffic related information: a temperature, a humidity, a weather condition, a traffic density, a velocity of a vehicle, an illumination, an image of a traffic situation, an image of a vehicle, an image of a part of a traffic infrastructure, an operation status of a traffic infrastructure, and/or an operation status of a vehicle. The same may optionally apply to other examples related to additional sensor data. The additional sensor data may be generated by the one or more vehicles based on one or more determinations (e.g., measurements, e.g., model calculations, etc.) carried out by one or more components of the vehicle. In some aspects, one or more vehicles may generate the additional sensor data based on one or more determinations (e.g., measurements, e.g., model calculations, etc.) carried out by one or more components of the vehicle.

In Example 56, the monitoring system of Example 54 or 55 may optionally further include that the one or more processors are further configured to either use or disregard the estimation reference data based on vehicle trust data associated with the one or more vehicles.

In Example 57, the monitoring system of Example 56 may optionally further include that the vehicle trust data are generated (e.g., by the one or more processors) based on vehicle validation data.

In Example 58, the monitoring system of Example 12 to 14, 52 or 57 may optionally further include that the one or more processors are configured to generate vehicle trust data based on the vehicle validation data.

In Example 59, the monitoring system of any one of Examples 41 to 58 may optionally further include that the one or more processors are configured to cause to send the validation data (or the trust data) to one or more vehicles (e.g., upon request by the one or more vehicles).

In Example 60, the monitoring system of any one of Examples 41 to 59 may optionally further include that the one or more processors are configured to assign additional validation data to one or more additional roadside units, the one or more additional roadside units are of the same type as the roadside unit, the additional validation data representing the same one or more results of the validation as the validation data.

In Example 61, the monitoring system of Examples 60 may optionally further include that the validation data representing an estimation quality associated with estimations generated by the roadside unit, and that the additional validation data representing the same estimation quality associated with estimations generated by the one or more additional roadside units as the estimation quality associated with estimations generated by the roadside unit.

In Example 62, the monitoring system of any one of Examples 41 to 61 may optionally further include that the one or more processors are configured to generate trust data based on the reference data, the trust data representing an estimation quality associated with estimations generated by the roadside unit, and cause to send the trust data to one or more vehicles (e.g., upon request by the one or more vehicles).

In Example 63, the monitoring system of any one of Examples 41 to 62 may optionally further include that the one or more processors are configured to assign additional trust data to one or more additional roadside units, the one or more additional roadside units are of the same type as the roadside unit, the additional trust data representing the same estimation quality associated with estimations generated by the one or more additional roadside units as the estimation quality associated with estimations generated by the roadside unit.

In Example 64, the monitoring system of Examples 60, 61 or 63 may optionally further include that the one or more additional roadside units include the least one of a same hardware, a same algorithm, and/or a same sensor input compared to the roadside unit.

Example 71 is a monitoring system (e.g., associated with a vehicle and/or associated with a traffic infrastructure system), the monitoring system including one or more processors configured to: obtain vehicle reliability data, the vehicle reliability data representing a reliability of data generated by one or more apparatus of the vehicle, validate the data generated by the one or more apparatus of the vehicle (e.g., generated by the one or more apparatus of the vehicle) based on the vehicle reliability data, generate vehicle validation data, the vehicle validation data representing one or more results of the validation of the data generated by the one or more apparatus of the vehicle.

In Example 72, the monitoring system of Example 71 may optionally further include that the data generated by the one or more apparatus of the vehicle include estimation reference data, the estimation reference data representing a reference estimation associated with an estimation generated by a roadside unit and/or the estimation reference data representing a validity of an estimation generated by a roadside unit.

In Example 73, the monitoring system of Example 71 or 72 may optionally further include that in the case that the vehicle validation data represent that the vehicle and/or it provided data are/is not trustworthy, the one or more processors are configured to ignore, less trust, or check again the data received from the vehicle.

Example 81 is a traffic infrastructure system including: a roadside unit connected to or including one or more sensors, wherein the roadside unit is, in a first operation mode, configured to generate a first estimation of one or more traffic related characteristics based on first sensor data provided from the one or more sensors to the roadside unit, wherein the roadside unit is, in a second operation mode, configured to obtain second sensor data, generate a second estimation of the one or more traffic related characteristics based on the second sensor data, and compare the first estimation and the second estimation with one another and based on the comparison, determine a quality of the first sensor data and/or a quality of the first estimation.

In Example 82, the traffic infrastructure system of Example 81 may optionally further include an additional roadside unit. The additional roadside unit is connected to or includes one or more second sensors and is configured to generate an estimation of one or more traffic related characteristics based on second sensor data provided from the one or more second sensors to the additional roadside unit. The additional roadside unit is configured to transmit the second sensor data to the roadside unit.

In Example 83, the traffic infrastructure system of Example 81 or 82 may optionally further include that the roadside unit is configured to store the first sensor data as reference data in one or more memories and to load the reference data from the one or more memories, the reference data loaded from the one or more memories serving as the second sensor data.

In Example 84, the traffic infrastructure system of any one of Examples 81 to 83 may optionally further include that the roadside unit is configured to obtain the second sensor data based on a communication with an apparatus of the traffic infrastructure system.

In Example 85, the traffic infrastructure system of any one of Examples 81 to 84 may optionally further include that an apparatus (of the traffic infrastructure system) that is configured to communicate with the roadside unit is part of a distributed computing system.

Example 90 is an apparatus of a roadside unit, the apparatus including one or more processors, configured to: obtain first sensor data, generate a first estimation of one or more traffic related characteristics based on the first sensor data, obtain second sensor data, generate a second estimation of the one or more traffic related characteristics based on the second sensor data, and compare the first estimation and the second estimation with one another, and determine a quality of the first sensor data and/or a quality of the first estimation based on the comparison.

Example 91 is an apparatus of a traffic infrastructure system (e.g., a monitoring system), the apparatus including one or more processors configured to: obtain estimation data, the estimation data representing one or more estimations generated by a roadside unit of one or more traffic related characteristics, obtain estimation reference data, the estimation reference data representing one or more reference estimations associated with the one or more estimations represented by the estimation data, validate the one or more estimations based on both the estimation data and the estimation reference data, and generate roadside unit validation data, the roadside unit validation data representing one or more results of the validation of the one or more estimations.

Example 101 is a method for monitoring a roadside unit, the method including: obtaining estimation data associated with a roadside unit, the estimation data representing one or more estimations generated by the roadside unit of one or more traffic related characteristics, obtaining estimation reference data, the estimation reference data representing one or more reference estimations associated with the one or more estimations represented by the estimation data, and generating roadside unit validation data based on validating the one or more estimations represented by the estimation data based on the estimation reference data, the roadside unit validation data representing one or more results of the validation of the one or more estimations.

In Example 102, the method of Example 101 may optionally include obtaining monitoring data. The monitoring data representing (e.g., ancillary) information associated with a creation of the one or more estimations by the roadside unit.

In Example 103, the method of Example 102 may optionally include generating the roadside unit validation data based on validating the one or more estimations represented by the estimation data based on the monitoring data and the roadside unit validation data.

In Example 104, the method of Example 102 or 103 may optionally include that the monitoring data include sensor data representing traffic related information, the sensor data being associated with the one or more estimations generated by the roadside unit of the one or more traffic related characteristics.

In Example 105, the method of Example 104 may optionally include generating the estimation reference data based on one or more algorithms applied on the sensor data.

In Example 106, the method of Example 103 may optionally include that the monitoring data include classification data representing one or more conditions potentially influencing the generation of the one or more estimations by the roadside unit.

In Example 107, the method of Example 106 may optionally include classifying the roadside unit validation data. The classified roadside unit validation data representing one or more results of the validation of the one or more estimations associated with the one or more conditions.

In Example 108, the method of Example 106 or 107 may optionally include that the one or more conditions include one or more of the following conditions: model parameter representing one or more characteristics of a model used to generate the one or more estimations, ambient conditions related to the roadside unit, and/or execution conditions representing one or more characteristics associated with an execution of a model used to generate the one or more estimations.

In Example 109, the method of any one of Examples 101 to 108 may optionally include generating the roadside unit validation data based on a plurality of results of the validation of a plurality of estimations. The roadside unit validation data representing an estimation quality associated with estimations generated by the roadside unit.

In Example 110, the method of any one of Examples 101 to 109 may optionally include, in a first time interval, generating the roadside unit validation data based on a plurality of results of the validation of a plurality of estimations. The roadside unit validation data representing an estimation quality associated with an estimation that is generated by the roadside unit in a second time interval subsequent to the first time interval.

In Example 111, the method of any one of Examples 101 to 110 may optionally include receiving the estimation reference data from the vehicle.

In Example 112, the method of Example 111 may optionally include obtaining vehicle reliability data, the vehicle reliability data representing a reliability of the estimation reference data generated by the vehicle, and generating vehicle validation data based on validating the estimation reference data generated by the vehicle based on the vehicle reliability data. The vehicle validation data are representing one or more results of the validation.

In Example 113, the method of Example 112 may optionally include either use, modify, or disregard the estimation reference data based on vehicle validation data associated with the vehicle.

In Example 114, the method of Example 112 or 113 may optionally assigning additional vehicle validation data to one or more additional vehicles, the one or more additional vehicles are of the same type as the vehicle. The additional vehicle validation data are representing the same one or more results of the validation as the vehicle validation data.

In Example 115, the method of any one of Examples 101 to 114 may optionally include cause to send the roadside unit validation data to one or more vehicles.

In Example 116, the method of any one of Examples 101 to 115 may optionally include assigning additional roadside unit validation data to one or more additional roadside units. The one or more additional roadside units are of the same type as the roadside unit. The additional roadside unit validation data are representing the same one or more results of the validation as the roadside unit validation data.

In Example 117, the method of any one of Examples 101 to 116 may optionally include cause to send an instruction to one or more roadside units based on an evaluation of the roadside unit validation data. The instructions representing a triggering of a repair scheme (e.g., a self heal) associated with the one or more roadside units.

Example 121 is a method to operate a roadside unit, the method including: generating estimation data, the estimation data representing an estimation of one or more traffic related characteristics based on traffic related information, cause to send the estimation data to one or more vehicles in a vicinity of the roadside unit, obtaining monitoring data, the monitoring data representing one or more parameters associated with the creation of the estimation of the one or more traffic related characteristics, and cause to send the estimation data and the monitoring data to a monitoring system associated with the roadside unit for creating validation data, the validation data representing an estimation quality associated with estimations generated by the one or more apparatus of the roadside unit.

In Example 122, the method of Examples 121 may optionally include cause to send the monitoring data to the one or more vehicles in the vicinity of the roadside unit.

Example 123 is a method for operating an apparatus of a vehicle, the method including: obtaining estimation data, the estimation data representing an estimation generated by a roadside unit of one or more traffic related characteristics, obtaining validation data, the validation data representing an estimation quality associated with estimations generated by the roadside unit, and selectively use, modify, or disregard the estimation represented by the estimation data based on the validation data.

In Example 124, the method of Examples 123 may optionally include to either allow, modify, or deny one or more vehicle-related actions based on both the estimation data and the validation data.

Example 125 is a method for operating an apparatus of a vehicle, the method including: obtaining estimation data and monitoring data, the estimation data representing an estimation generated by a roadside unit of one or more traffic related characteristics and the monitoring data representing one or more parameters associated with the creation of the estimation of the one or more traffic related characteristics, obtaining reference data, the reference data representing a reference estimation associated with the estimation represented by the estimation data, validating the estimation based on the estimation data, the monitoring data, and the reference data, and cause to send validation data to a monitoring system, the validation data representing on one or more results of the validation of the estimation.

Example 125 is a method for operating an apparatus of a vehicle, the method including: obtaining estimation data and optionally monitoring data, the estimation data representing an estimation generated by a roadside unit of one or more traffic related characteristics and the monitoring data representing one or more parameters associated with the creation of the estimation of the one or more traffic related characteristics, obtaining reference data, the reference data representing a reference estimation associated with the estimation represented by the estimation data, and cause to send the reference data to a monitoring system, the reference data allow for a validation of the estimation represented by the estimation data, optionally based on the monitoring data.

Example 125 is a method for operating a traffic infrastructure system, the method including: obtaining trust data, the trust data representing an estimation quality associated with estimations generated by a roadside unit, and cause to send the trust data to one or more vehicles. The method 125 may optionally further include: receiving a request of one or more vehicles including roadside unit identification data, the roadside unit identification data indicating a specific roadside unit of the traffic infrastructure system, and cause to send the trust data associated with the specific roadside unit to the one or more vehicles.

Example 126 is a method for operating a monitoring system, the method including: obtaining estimation data and monitoring data associated with a roadside unit, the estimation data representing one or more estimations generated by the roadside unit of one or more traffic related characteristics and the monitoring data representing (e.g., ancillary) information associated with a creation of the one or more estimations by the roadside unit, obtaining estimation reference data, the estimation reference data representing one or more reference estimations associated with the one or more estimations represented by the estimation data, validating the one or more estimations based on the estimation data, the monitoring data, and the estimation reference data, and generating roadside unit validation data, the roadside unit validation data representing one or more results of the validation of the one or more estimations.

Example 127 is a method for operating a monitoring system, the method including: obtaining vehicle reliability data, the vehicle reliability data representing a reliability of data generated by one or more apparatus of the vehicle, validating the data generated by the one or more apparatus of the vehicle (e.g., generated by the one or more apparatus of the vehicle) based on the vehicle reliability data, and generating vehicle validation data, the vehicle validation data representing one or more results of the validation of the data generated by the one or more apparatus of the vehicle.

Example 128 is a method for operating a roadside unit, the method including: in a first operation mode, generating a first estimation of one or more traffic related characteristics based on first sensor data provided from one or more sensors to the roadside unit; and, in a second operation mode, obtaining second sensor data, generating a second estimation of the one or more traffic related characteristics based on the second sensor data, and comparing the first estimation and the second estimation with one another and based on the comparison, determining a quality of the first sensor data and/or a quality of the first estimation.

Example 129 is a method for operating a roadside unit, the method including: obtaining first sensor data, generating a first estimation of one or more traffic related characteristics based on the first sensor data, obtaining second sensor data, generating a second estimation of the one or more traffic related characteristics based on the second sensor data, and comparing the first estimation and the second estimation with one another, and determining a quality of the first sensor data and/or a quality of the first estimation based on the comparison.

Example 130 is a method for operating a traffic infrastructure system, the method including: obtaining estimation data, the estimation data representing one or more estimations generated by a roadside unit of one or more traffic related characteristics, obtaining estimation reference data, the estimation reference data representing one or more reference estimations associated with the one or more estimations represented by the estimation data, validating the one or more estimations based on both the estimation data and the estimation reference data, and generating roadside unit validation data, the roadside unit validation data representing one or more results of the validation of the one or more estimations.

Example 131 is a means for monitoring a roadside unit, including one or more processing means for: obtaining estimation data associated with a roadside unit, the estimation data representing one or more estimations generated by the roadside unit of one or more traffic related characteristics, obtaining estimation reference data, the estimation reference data representing one or more reference estimations associated with the one or more estimations represented by the estimation data, and generating roadside unit validation data based on validating the one or more estimations represented by the estimation data based on the estimation reference data, the roadside unit validation data representing one or more results of the validation of the one or more estimations.

Example 132 is a means for operating a roadside unit, including one or more processing means for: generating estimation data, the estimation data representing an estimation of one or more traffic related characteristics based on traffic related information, cause to send the estimation data to one or more vehicles in a vicinity of the roadside unit, obtaining monitoring data, the monitoring data representing one or more parameters associated with the creation of the estimation of the one or more traffic related characteristics, and cause to send the estimation data and the monitoring data to a monitoring system associated with the roadside unit for creating validation data, the validation data representing an estimation quality associated with estimations generated by the one or more apparatus of the roadside unit.

Example 133 is a means for operating an apparatus of a vehicle, including one or more processing means for: obtaining estimation data, the estimation data representing an estimation generated by a roadside unit of one or more traffic related characteristics, obtaining validation data, the validation data representing an estimation quality associated with estimations generated by the roadside unit, and selectively use, modify, or disregard the estimation represented by the estimation data based on the validation data.

Example 134 is a means for operating an apparatus of a vehicle, including one or more processing means for: obtaining estimation data and monitoring data, the estimation data representing an estimation generated by a roadside unit of one or more traffic related characteristics and the monitoring data representing one or more parameters associated with the creation of the estimation of the one or more traffic related characteristics, obtaining reference data, the reference data representing a reference estimation associated with the estimation represented by the estimation data, validating the estimation based on the estimation data, the monitoring data, and the reference data, and cause to send validation data to a monitoring system, the validation data representing on one or more results of the validation of the estimation.

Example 135 is a means for operating an apparatus of a vehicle, including one or more processing means for: obtaining estimation data and optionally monitoring data, the estimation data representing an estimation generated by a roadside unit of one or more traffic related characteristics and the monitoring data representing one or more parameters associated with the creation of the estimation of the one or more traffic related characteristics, obtaining reference data, the reference data representing a reference estimation associated with the estimation represented by the estimation data, and cause to send the reference data to a monitoring system, the reference data allow for a validation of the estimation represented by the estimation data, optionally based on the monitoring data.

Example 136 is a means for operating a traffic infrastructure system, including one or more processing means for: obtaining trust data, the trust data representing an estimation quality associated with estimations generated by a roadside unit, and cause to send the trust data to one or more vehicles. The method 125 may optionally further include: receiving a request of one or more vehicles including roadside unit identification data, the roadside unit identification data indicating a specific roadside unit of the traffic infrastructure system, and cause to send the trust data associated with the specific roadside unit to the one or more vehicles.

Example 137 is a means for operating a monitoring system, including one or more processing means for: obtaining estimation data and monitoring data associated with a roadside unit, the estimation data representing one or more estimations generated by the roadside unit of one or more traffic related characteristics and the monitoring data representing (e.g., ancillary) information associated with a creation of the one or more estimations by the roadside unit, obtaining estimation reference data, the estimation reference data representing one or more reference estimations associated with the one or more estimations represented by the estimation data, validating the one or more estimations based on the estimation data, the monitoring data, and the estimation reference data, and generating roadside unit validation data, the roadside unit validation data representing one or more results of the validation of the one or more estimations.

Example 138 is a means for operating a monitoring system, including one or more processing means for: obtaining vehicle reliability data, the vehicle reliability data representing a reliability of data generated by one or more apparatus of a vehicle, validating the data generated by the vehicle (e.g., generated by the one or more apparatus of the vehicle) based on the vehicle reliability data, and generating vehicle validation data, the vehicle validation data representing one or more results of the validation of the data generated by the vehicle (e.g., generated by the one or more apparatus of the vehicle).

Example 139 is a means for operating a roadside unit, including one or more processing means for: in a first operation mode, generating a first estimation of one or more traffic related characteristics based on first sensor data provided from one or more sensors to the roadside unit; and, in a second operation mode, obtaining second sensor data, generating a second estimation of the one or more traffic related characteristics based on the second sensor data, and comparing the first estimation and the second estimation with one another and based on the comparison, determining a quality of the first sensor data and/or a quality of the first estimation.

Example 140 is a means for operating a roadside unit, including one or more processing means for: obtaining first sensor data, generating a first estimation of one or more traffic related characteristics based on the first sensor data, obtaining second sensor data, generating a second estimation of the one or more traffic related characteristics based on the second sensor data, and comparing the first estimation and the second estimation with one another, and determining a quality of the first sensor data and/or a quality of the first estimation based on the comparison.

Example 141 is a means for operating a traffic infrastructure system, including one or more processing means for: obtaining estimation data, the estimation data representing one or more estimations generated by a roadside unit of one or more traffic related characteristics, obtaining estimation reference data, the estimation reference data representing one or more reference estimations associated with the one or more estimations represented by the estimation data, validating the one or more estimations based on both the estimation data and the estimation reference data, and generating roadside unit validation data, the roadside unit validation data representing one or more results of the validation of the one or more estimations.

According to various aspects, any method or part of a method described herein may be partially or completely implemented as a non-transitory computer readable medium with program instructions, which when executed, cause one or more processors to perform at least a portion or all of the method.

According to various aspects, any function or combination of functions described with reference the examples above may be partially or completely implemented as a method, in some aspects independently of the apparatus that is described to implement the respective function or combination of functions.

According to various aspects, any function or combination of functions described with reference the examples above may be partially or completely implemented by one or more means, in some aspects independently of the apparatus that is described to implement the respective function or combination of functions.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A monitoring system, comprising one or more processors configured to:
obtain estimation data associated with a roadside unit, the estimation data representing one or more estimations generated by the roadside unit of one or more traffic related characteristics,
obtain estimation reference data, the estimation reference data representing one or more reference estimations associated with the one or more estimations represented by the estimation data, and
generate roadside unit validation data based on validating the one or more estimations represented by the estimation data based, at least, on the estimation reference data, the roadside unit validation data representing one or more results of the validation of the one or more estimations.

2. The monitoring system of claim 1,
wherein the one or more processors are further configured to obtain monitoring data, the monitoring data representing information associated with a creation of the one or more estimations by the roadside unit.

3. The monitoring system of claim 2,
wherein the one or more processors are configured to generate the roadside unit validation data based on validating the one or more estimations represented by the estimation data based on the monitoring data and the roadside unit validation data.

4. The monitoring system of any one of claims 2 or 3,
wherein the monitoring data comprise sensor data representing traffic related information, and
wherein the sensor data are associated with the one or more estimations generated by the roadside unit of the one or more traffic related characteristics;
wherein preferably the one or more processors are configured to generate the estimation reference data based on one or more algorithms applied on the sensor data.

5. The monitoring system of any one of claims 3 or 4,
wherein the monitoring data comprise classification data representing one or more conditions potentially influencing the generation of the one or more estimations by the roadside unit, and wherein the one or more processors are further configured to classify the roadside unit validation data, the classified roadside unit validation data representing one or more results of the validation of the one or more estimations associated with the one or more conditions;
wherein preferably the one or more conditions comprise one or more of the following conditions:
model parameter representing one or more characteristics of a model used to generate the one or more estimations,
ambient conditions related to the roadside unit, and/or
execution conditions representing one or more characteristics associated with an execution of a model used to generate the one or more estimations.

6. The monitoring system of any one of claims 1 to 5,
wherein the one or more processors are configured to generate the roadside unit validation data based on a plurality of results of the validation of a plurality of estimations, the roadside unit validation data representing an estimation quality associated with estimations generated by the roadside unit.

7. The monitoring system of any one of claims 1 to 6,
wherein, in a first time interval, the one or more processors are configured to generate the roadside unit validation data based on a plurality of results of the validation of a plurality of estimations, the roadside unit validation data representing an estimation quality associated with an estimation that is generated by the roadside unit in a second time interval subsequent to the first time interval.

8. The monitoring system of any one of claims 1 to 7,
wherein the one or more processors are configured to receive the estimation reference data from one or more vehicles.

9. The monitoring system of any one of claims 1 to 8,
wherein the one or more processors are configured to:
obtain vehicle trust data based on validating vehicle data generated by one or more vehicles, the vehicle trust data representing a data quality associated with vehicle data generated by the one or more vehicles;
wherein preferably the vehicle data comprise the estimation reference data generated by the one or more vehicles, and wherein the one or more processors are further configured to either use, modify, or disregard the estimation reference data based on the vehicle trust data associated with the one or more vehicles.

10. The monitoring system of claim 9,
wherein the one or more processors are further configured to assign additional vehicle trust data to one or more additional vehicles, the one or more additional vehicles are of the same type as the one or more vehicles, the additional vehicle trust data representing the same data quality as the vehicle trust data.

11. The monitoring system of any one of claims 1 to 10,
wherein the one or more processors are further configured to cause to send the roadside unit validation data to one or more vehicles.

12. The monitoring system of any one of claims 1 to 11,
wherein the one or more processors are further configured to assign additional roadside unit validation data to one or more additional roadside units, the one or more additional roadside units are of the same type as the roadside unit, the additional roadside unit validation data representing the same one or more results of the validation as the roadside unit validation data.

13. The monitoring system of any one of claims 1 to 12,
wherein the one or more processors are further configured to cause to send an instruction to one or more roadside units based on an evaluation of the roadside unit validation data, the instruction representing a triggering of a repair scheme associated with the one or more roadside units.

14. An apparatus of a roadside unit, the apparatus comprising one or more processors configured to:
generate estimation data, the estimation data representing an estimation of one or more traffic related characteristics based on traffic related information,
cause to send the estimation data to one or more vehicles in a vicinity of the roadside unit,
obtain monitoring data, the monitoring data representing one or more parameters associated with the creation of the estimation of the one or more traffic related characteristics, and
cause to send the estimation data and the monitoring data to a monitoring system associated with the roadside unit for creating validation data, the validation data representing an estimation quality associated with estimations generated by the one or more apparatus of the roadside unit.

15. The apparatus of claim 14,
wherein the one or more processors are further configured to cause to send the monitoring data to the one or more vehicles in the vicinity of the roadside unit.
